# EUROPÄISCHE PATENTSCHRIFT

(11) **EP 0 477 319 B1**
(45) Veröffentlichungstag und Bekanntmachung des Hinweises auf die Patenterteilung: **24.07.1996**
(21) Anmeldenummer: 91906934.4
(22) Anmeldetag: 30.03.1991
(51) Int. Cl.: C09K 19/30, C09K 19/42

(54) **FLÜSSIGKRISTALLINES MEDIUM**
LIQUID CRYSTALLINE MEDIUM
MILIEUX DE CRISTAUX LIQUIDES

(30) Priorität: 13.04.1990 DE 4012034
(43) Veröffentlichungstag der Anmeldung: 01.04.1992
(60) Teilanmeldung: 95120484.1
(73) Patentinhaber: MERCK PATENT GmbH, D-64271 Darmstadt (DE)
(72) Erfinder: RIEGER, Bernhard Wacore - Tamagawagakuen, Yokohama-shi Kanagawa-pref. 227 (JP); HITTICH, Reinhard, D-6101 Modautal 1 (DE); REIFFENRATH, Volker, D-6101 Rossdorf (DE); PLACH, Herbert, D-6100 Darmstadt (DE)
(86) Internationale Anmeldenummer: EP9100611
(87) Internationale Veröffentlichungsnummer: WO9116393

(56) Entgegenhaltungen:
- EP-A- 0 209 622
- EP-A- 0 258 868
- EP-A- 0 318 003
- EP-A- 0 390 395
- EP-A- 0 414 048
- DE-A- 4 010 684
- US-A- 4 405 488

## Beschreibung

Die vorliegende Erfindung betrifft ein flüssigkristallines Medium, dessen Verwendung für elektrooptische Zwecke und dieses Medium enthaltende Anzeigen.

Flüssige Kristalle werden vor allem als Dielektrika in Anzeigevorrichtungen verwendet, da die optischen Eigenschaften solcher Substanzen durch eine angelegte Spannung beeinflußt werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("super-twisted nematic"), SBE-Zellen ("super-birefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben. Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, daß die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relativ niedriger Doppelbrechung, sehr hohem spezifischen Widerstand guter UV- und Temperaturstabilität des Widerstands und geringem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor)-Transistoren auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, daß je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfaßt hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten.

Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, daß der spezifische Widerstand eine möglichst geringe Zunahme bei steigender Temperatur sowie nach Temperatur- und/oder UV-Belastung zeigt. Die MFK-Anzeigen aus dem Stand der Technik genügen nicht den heutigen Anforderungen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung, die diese Nachteile nicht oder nur in geringerem Maße zeigen.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- Schaltbarkeit bei extrem tiefen Temperaturen (out-door-use, Automobil, Avionik)
- Erhöhte Beständigkeit gegenüber UV-Strahlung (längere Lebensdauer)

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannungen und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Der Erfindung liegt die Aufgabe zugrunde, Medien insbesondere für derartige MFK-, TN- oder STN-Anzeigen bereitzustellen, die die oben angegebenen Nachteile nicht oder nur in geringerem Maße, und vorzugsweise gleichzeitig sehr hohe spezifische Widerstände und niedrige Schwellenspannungen aufweisen.

Es wurde nun gefunden, daß diese Aufgabe gelöst werden kann, wenn man in Anzeigen erfindungsgemäße Medien verwendet.

Gegenstand der Erfindung ist somit ein flüssigkristallines Medium auf der Basis eines Gemisches von polaren Verbindungen mit positiver dielektrischer Anisotropie, dadurch gekennzeichnet, daß es eine oder mehrere Verbindungen der allgemeinen Formel I 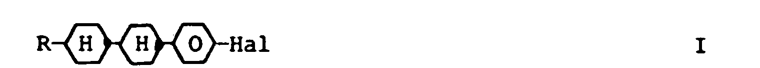 worin Hal Fluor oder Chlor und R Alkyl, Oxaalkyl, Fluoralkyl oder Alkenyl mit jeweils bis zu 7 C-Atomen bedeutet,
eine oder mehrere Verbindungen mit einer dielektrischen Anisotropie von -1,5 bis +1,5 ausgewählt aus der Gruppe bestehend aus folgenden Formeln: 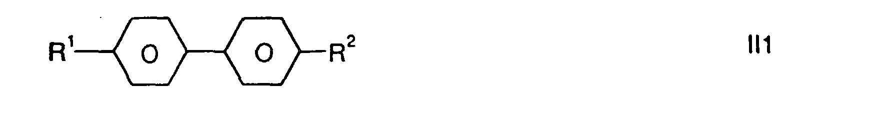 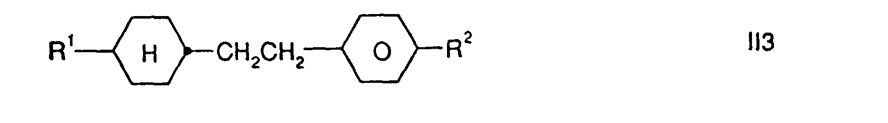 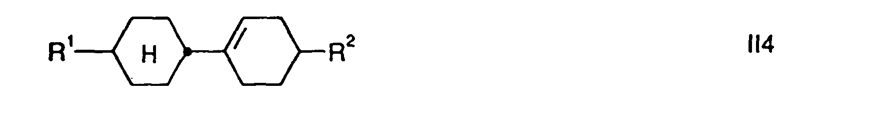 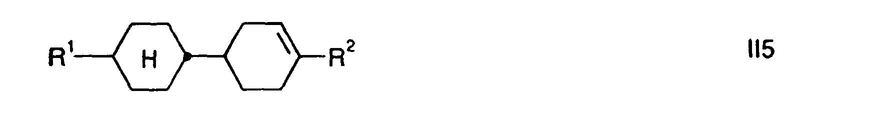 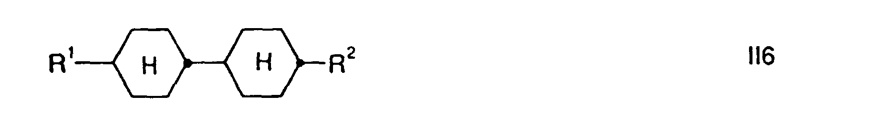 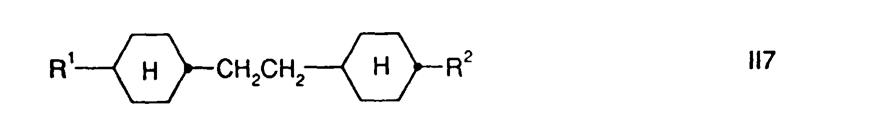 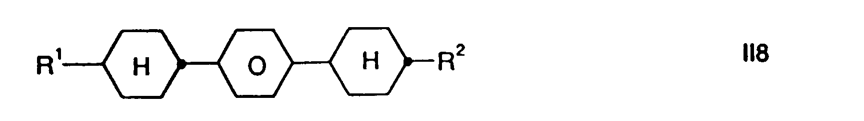 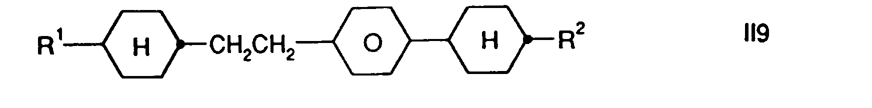 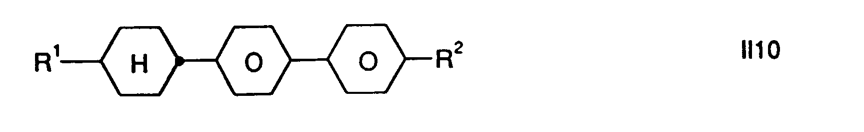 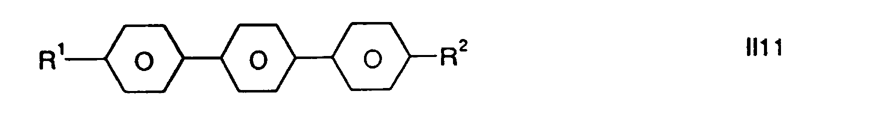 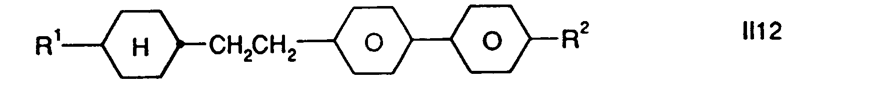 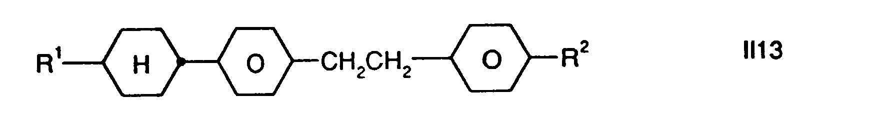 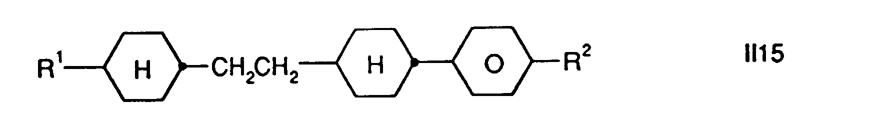 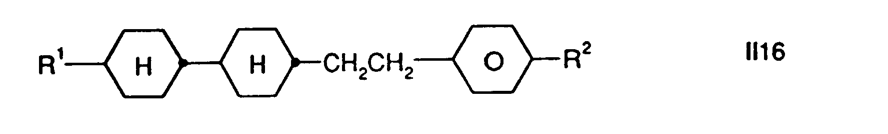 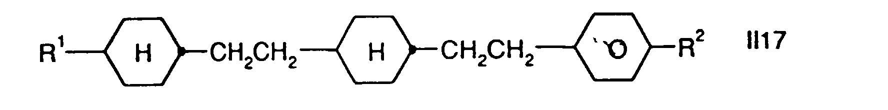 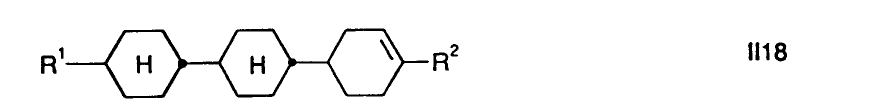 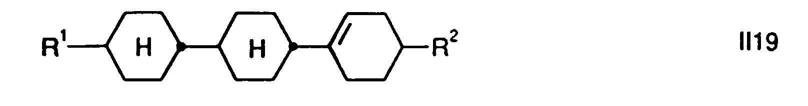 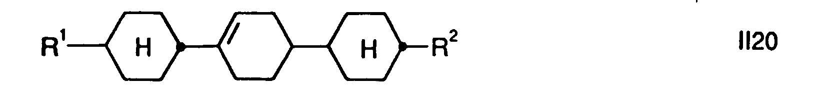 worin R¹ und R² jeweils unabhängig voneinander n-Alkyl, n-Alkoxy, ω-Fluoralkyl oder n-Alkenyl mit bis zu 9 C-Atomen bedeuten und die 1,4-Phenylengruppen in 118 bis 1117 jeweils unabhängig voneinander auch durch Fluor ein- oder mehrfach substituiert sein können,
und eine oder mehrere Verbindungen der Formel I" enhält, 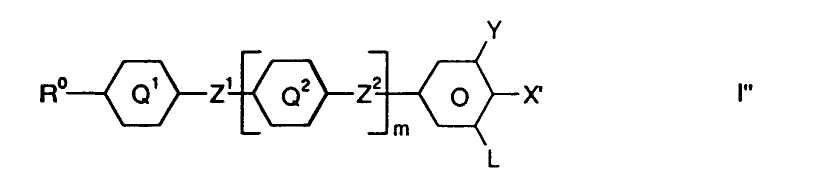 worin
- Z¹ und Z²: jeweils unabhängig voneinander -CH₂CH₂-, -C≡C-, -CO-O-, -O-CO- oder eine Einfachbindung,
- m: 0, 1 oder 2,
- Q¹ und Q²: jeweils unabhängig voneinander 1,4-Phenylen, trans-1,4-Cyclohexylen oder 3-Fluor-1,4-phenylen- oder einer der Reste Q¹ und Q² auch trans-1,3-Dioxan-2,5-diyl, Pyrimidin-2,5-diyl, Pyridin-2,5-diyl oder 1,4-Cyclohexenylen bedeutet,
- R⁰: n-Alkyl, n-Alkenyl, n-Alkoxy oder n-Oxaalkyl mit jeweils bis zu 9 C-Atomen,
- L: H oder F,
- Y: H oder F und
- X': CN, Halogen, CF₃, OCF₃ oder OCHF₂ ist.

Gegenstand der Erfindung sind auch elektrooptische Anzeigen (insbesondere STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Ähnliche Gemische sind in EP-A-0 209 622, EP-A-0 258 868, EP-A- 0 318 003, US-A-4,405,488, EP-A-0 414 048 und EP A-0 390 395 beschrieben.

Die erfindungsgemäßen Flüssigkristallmischungen ermöglichen eine bedeutende Erweiterung des zur Verfügung stehenden Parameterraumes.

Die erzielbaren Kombinationen aus Klärpunkt, Viskosität bei tiefer Temperatur, thermischer und UV-Stabilität und dielektrischer Anisotropie übertreffen bei weitem bisherige Materialien aus dem Stand der Technik.

Die erzielbaren Kombinationen aus Klärpunkt, Viskosität bei tiefer Temperatur, thermischer und UV-Stabilität und dielektrischer Anisotropie bzw. Schwellenspannung übertreffen bei weitem bisherige Materialien aus dem Stand der Technik.

Die Forderung nach hohem Klärpunkt, nematischer Phase bei -40 °C sowie einem hohen Δε konnte bislang nur unzureichend erfüllt werden. Systeme wie z.B. ZLI-3119 weisen zwar vergleichbaren Klärpunkt und vergleichbar günstige Viskositäten auf, besitzen jedoch ein Δε von nur +3.

Andere Mischungs-Systeme besitzen vergleichbare Viskositäten und Werte von Δε, weisen jedoch nur Klärpunkte in der Gegend von 60 °C auf.

Die erfindungsgemäßen Flüssigkristallmischungen ermöglichen es bei niedrigen Viskositäten bei tiefen Temperaturen (bei -30 °C ≤ 600, vorzugsweise ≤ 550 mPa.S; bei -40 °C ≤ 1800, vorzugsweise ≤ 1700 mPa.s) gleichzeitig dielektrische Anisotropiewerte Δε ≥ 3,5, vorzugsweise ≥ 4,0, Klärpunkte oberhalb 65°, vorzugsweise oberhalb 70° und einen hohen Wert für den spezifischen Widerstand zu erreichen, wodurch hervorragende STN- und MKF-Anzeigen erzielt werden können.

Es versteht sich, daß durch geeignete Wahl der Komponenten der erfindungsgemäßen Mischungen auch höhere Klärpunkte (z.B. oberhalb 90°) bei höheren Schwellenspannung oder niedrigere Klärpunkte bei niedrigeren Schwellenspannungen unter Erhalt der anderen vorteilhaften Eigenschaften realisiert werden können. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum eine kleinerere dielektrische Anisotropie ausreichend ist. Hierdurch lassen sich unter Verwendung der errindungsgemäßen Miscnungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Die Viskosität bei 20 °C ist vorzugsweise ≤ 25 mPa.s. Der nematische Phasenbereich ist vorzugsweise mindestens 70°, insbesondere mindestens 80°. Vorzugsweise erstreckt sich dieser Bereich mindestens von -30° bis +70°.

Messungen des "Voltage Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, daß erfindungsgemäße Mischungen enthaltend Verbindungen der Formel I eine deutlich kleinere Abnahme des HR mit steigender Temperatur aufweisen als analoge Mischungen enthaltend anstelle den Verbindungen der Formel I Cyanophenylcyclohexane der Formel 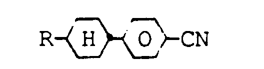 Auch die UV-Stabilität der erfindungsgemäßen Mischungen ist erheblich besser, d. h. sie zeigen eine deutlich kleinere Abnahme des HR unter UV-Belastung.

Die erzielten Schwellenspannungen (Vₜₕ) sind im allgemeinen ≤ 1,8 Volt, vorzugsweise im Bereich 1,4 bis 1,7 Volt.

Die erfindungsgemäßen Medien zeichnen sich neben ungewöhnlich weitem nematischen Phasenbereich auch durch außerordentlich hohe elastische Konstanten bei sehr günstigen Viskositätswerten aus, wodurch insbesondere bei Verwendung in STN-Anzeigen deutlich Vorteile gegenüber Medien aus dem Stand der Technik resultieren.

Vorzugsweise basieren die erfindungsgemäßen Medien auf mehreren (vorzugsweise zwei oder mehr) Verbindungen der Formel I, d.h. der Anteil dieser Verbindungen ist ≥ 25 %, vorzugsweise ≥ 40 %.

Die einzelnen Verbindungen der Formeln I bis XII und deren Unterformeln, die in den erfindungsgemäßen Medien verwendet werden können, sind entweder bekannt, oder sie können analog zu den bekannten Verbindungen hergestellt werden.

Bevorzugte Ausführungsformen sind im folgenden angegeben:
- Medium enthält zusätzlich eine oder mehrere Verbindungen ausgewählt aus der Gruppe bestehend aus den allgemeinen Formeln II, III und IV: 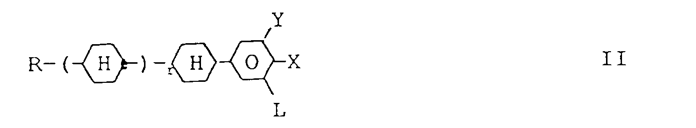 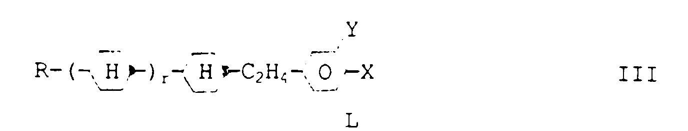 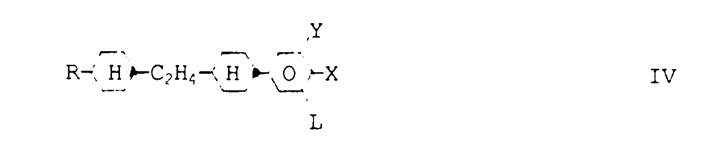 worin die einzelnen Reste die folgenden Bedeutungen haben:
   - R:: Alkyl, Oxaalkyl, Fluoralkyl oder Alkenyl mit jeweils bis zu 7 C-Atomen
   - X:: F, Cl, CF₃, OCF₃ oder OCHF₂
   - L:: H oder F
   - Y:: H oder F
   - r:: 0 oder 1.
- Medium enthält zusätzlich eine oder mehrere Verbindungen ausgewählt aus der Gruppe bestehend aus den allgemeinen Formeln V bis VIII: 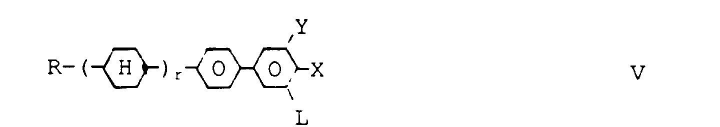 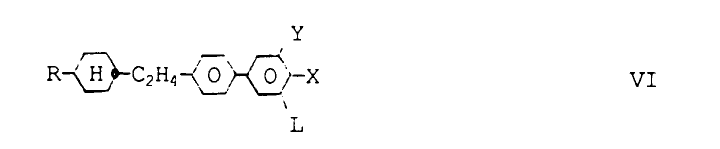 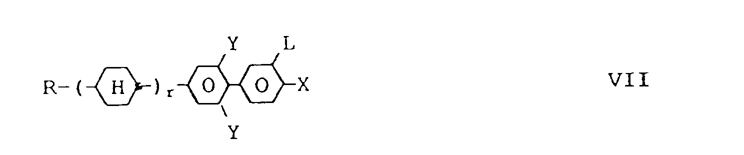 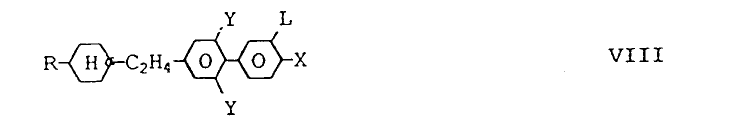 worin R, L, X und Y jeweils unabhängig voneinander eine der in Anspruch 1 angegebene Bedeutung haben.
- Medium enthält zusätzlich eine oder mehrere Verbindungen ausgewählt aus der Gruppe bestehend aus der allgemeinen Formeln IX bis XIII: 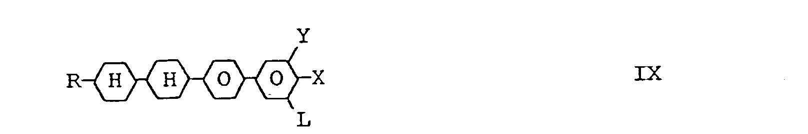 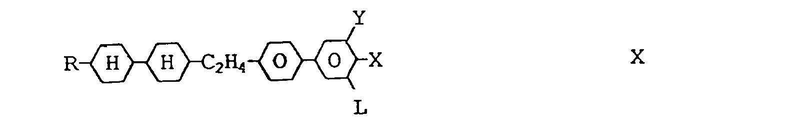 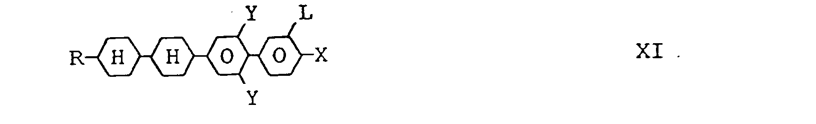 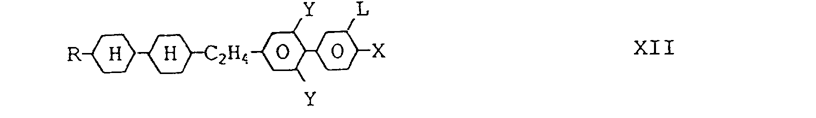 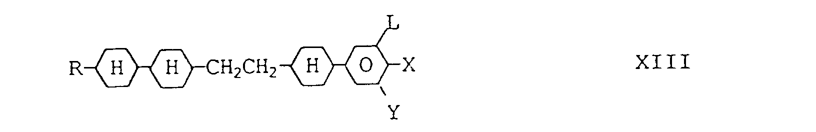 worin R, L, X und Y jeweils unabhängig voneinander eine der in Anspruch 1 angegebene Bedeutung haben.
- Der Anteil an Verbindungen der Formeln I bis IV zusammen beträgt im Gesamtgemisch mindestens 50 Gew.-%
- der Anteil an Verbindungen der Formel I beträgt im Gesamtgemisch 10 bis 50 Gew.-%
- der Anteil an Verbindungen der Formeln II bis IV im Gesamtgemisch beträgt 30 bis 70 Gew.-%
- 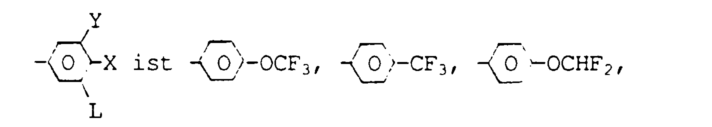 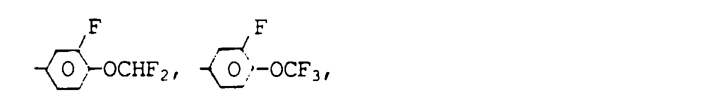 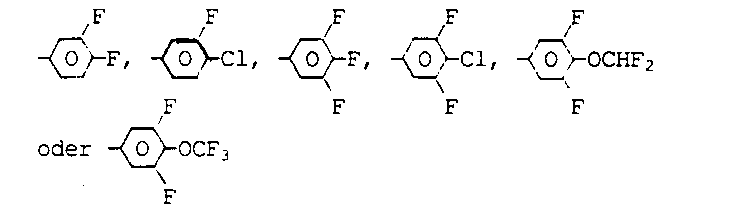
- das Medium enthält Verbindungen der Formeln II und III oder IV
- R ist geradkettiges Alkyl oder Alkenyl mit 2 bis 7 C-Atomen
- das Medium besteht im wesentlichen aus Verbindungen der Formeln I bis IV
- das Medium enthält weitere Verbindungen, vorzugsweise ausgewählt aus der folgenden Gruppe: 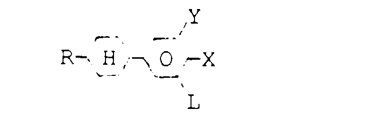 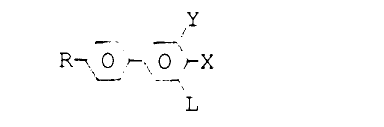 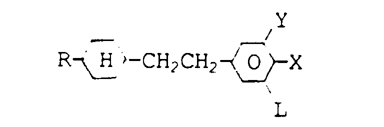 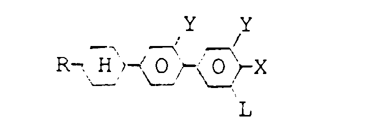 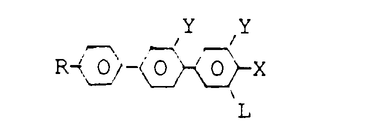 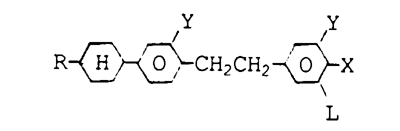 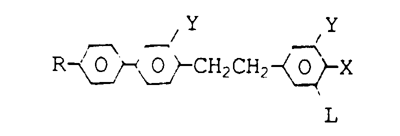 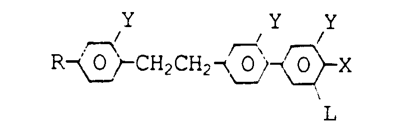 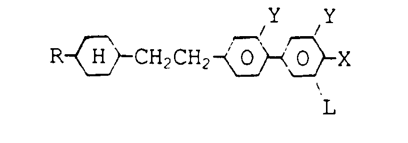
- Das Gewichtsverhältnis I: (II + III + IV) ist vorzugsweise 1 : 4 bis 1 : 1.
- Medium besteht im wesentlichen aus Verbindungen ausgewählt aus der Gruppe bestehend aus den allgemeinen Formeln I bis XII.

Es wurde gefunden, daß bereits ein relativ geringer Anteil an Verbindungen der Formel I im Gemisch mit üblichen Flüssigkristallmaterialien, insbesondere jedoch mit einer oder mehreren Verbindungen der Formel II, III und/oder IV zu einer beträchtlichen Verbesserung der Ansprechzeiten und zu niedrigen Schwellenspannungen führt, wobei gleichzeitig breite nematische Phasen mit tiefen Übergangstemperaturen smektisch-nematisch beobachtet werden. Die Verbindungen der Formeln I bis IV sind farblos, stabil und untereinander und mit anderen Flüssigkristallmaterialien gut mischbar.

Der Ausdruck "Alkyl" umfaßt geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppe mit 2-5 Kohlenstoffatomen sind im allgemeinen bevorzugt.

Der Ausdruck "Alkenyl" umfaßt geradkettige und verzweigte Alkenylgruppen mit 2-7 Kohlenstoffatomen, insbesondere die geradkettigen Gruppen. Besonders Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele bevorzugter Alkenylgruppen sind Vinyl, 1E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfaßt vorzugsweise geradkettige Gruppen mit endständigen Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfaßt vorzugsweise geradkettige Reste der Formel CₙH₂ₙ₊₁-O-(CH₂)ₘ, worin n und m jeweils unabhängig voneinander 1 bis 6 bedeuten. Vorzugsweise ist n = 1 und m 1 bis 6.

Durch geeignete Wahl der Bedeutungen von R, X und Y können die Ansprechzeiten, die Schwellenspannung, die Steilheit der Transmissionskennlinien etc. in gewünschter Weise modifiziert werden. Beispielsweise führen 1E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten.

Eine Gruppe -CH₂CH₂- in Z¹ bzw. Z² führt im allgemeinen zu höheren Werte von k₃₃/k₁₁ im Vergleich zu einer einfachen Kovalenzbindung. Höhere Werte von k₃₃/k₁₁ ermöglichen z.B. flachere Transmissionskennlinien in TN-zellen mit 90° Verdrillung (zur Erzielung von Grautönen) und steilere Transmissionskennlinien in STN-, SBE- und OMI-Zellen (höhere Multiplexierbarkeit) und umgekehrt.

Das optimale Mengenverhältnis der Verbindungen der Formeln I und II + III + IV hängt weitgehend von den gewünschten Eigenschaften, von der Wahl der Komponenten der Formeln I, II, III und/oder IV und von der Wahl weiterer gegebenenfalls vorhandener Komponenten ab. Geeignete Mengenverhältnisse innerhalb des oben angegebenen Bereichs können von Fall zu Fall leicht ermittelt werden.

Die Gesamtmenge an Verbindungen der Formeln I bis XII in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln I bis XII ist.

In einer besonders bevorzugten Ausführungsform enthalten die erfindungsgemäßen Medien Verbindungen der Formeln II, III, V und/oder VII (vorzugsweise II und/oder III), worin X CF₃, OCF₃ oder X OCHF₂ bedeutet. Eine günstige synergistische Wirkung mit den Verbindungen der Formel I führt zu besonders vorteilhaften Eigenschaften.

Weiterhin bevorzugt sind solche Medien worin bei den Verbindungen der vorgenannten Formeln II bis VII worin X F oder Cl und L und Y F bedeuten.

Für STN-Anwendungen enthalten die Medien vorzugsweise Verbindungen ausgewählt aus der Gruppe bestehend aus den Formeln V bis VIII, worin X vorzugsweise OCHF₂ bedeutet.

Die erfindungsgemäßen Medien enthalten ferner eine Komponente A bestehend aus einer oder mehreren Verbindungen mit einer dielektrischen Anisotropie von -1,5 bis +1,5 der allgemeinen Formel I' 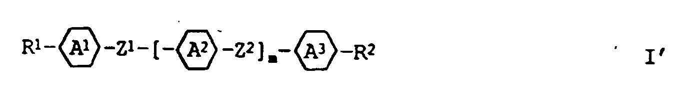 worin
- R¹ und R²: jeweils unabhängig voneinander n-Alkyl, n-Alkoxy, ω-Fluoralkyl oder n-Alkenyl mit bis zu 9 C-Atomen,
- die Ringe A¹, A² und A³: jeweils unabhängig voneinander 1,4-Phenylen, 2- oder 3-Fluor-1,4-phenylen, trans-1,4-Cyclohexylen oder 1,4-Cyclohexenylen,
- Z¹ und Z²: jeweils unabhängig voneinander -CH₂CH₂-,-C≡C-, -CO-O-, -O-CO-, oder eine Einfachbindung,
- und:
- m: 0, 1 oder 2 bedeutet.

Komponente A enthält vorzugsweise eine oder mehrere Verbindungen ausgewählt aus der Gruppe bestehend aus II1 bis II7: 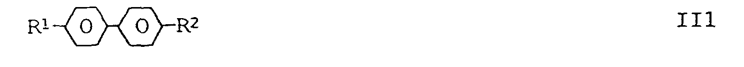 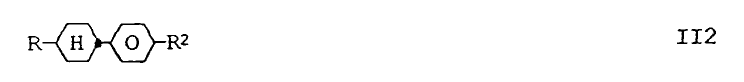 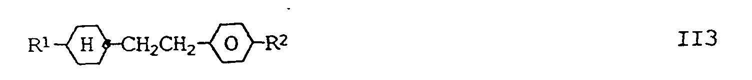 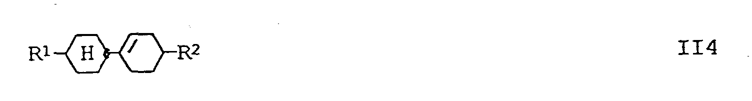 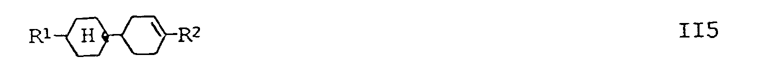 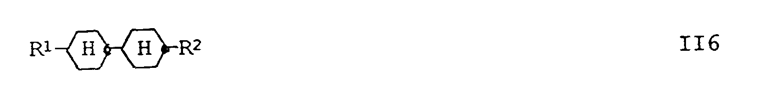 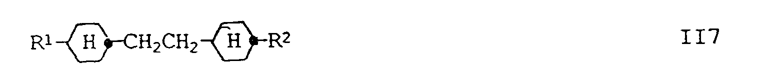 worin R¹ und R² die bei Formel I' angegebene Bedeutung haben.

Vorzugsweise enthält Komponente A zusätzlich eine oder mehrere Verbindungen ausgewählt aus der Gruppe bestehend aus II8 bis II20: 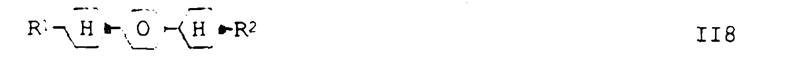 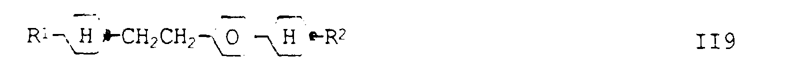 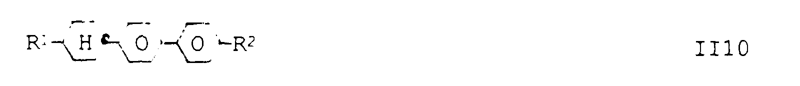 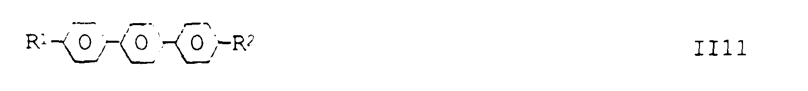 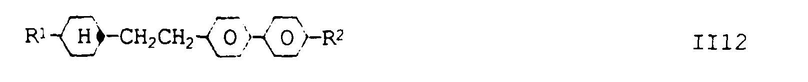 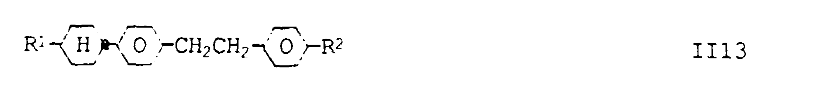 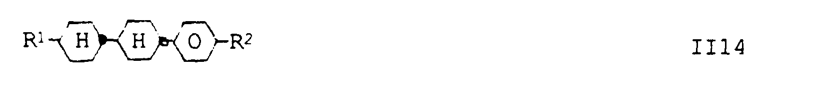 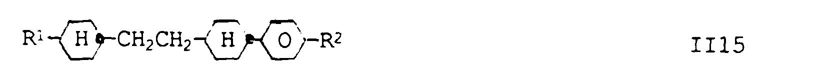 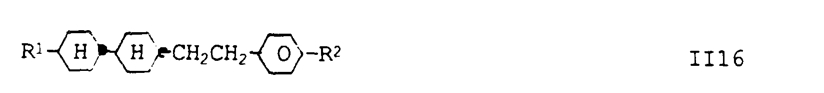 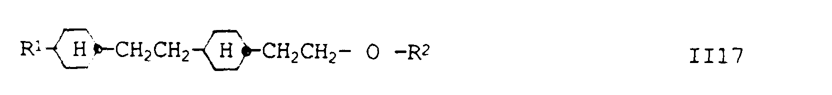 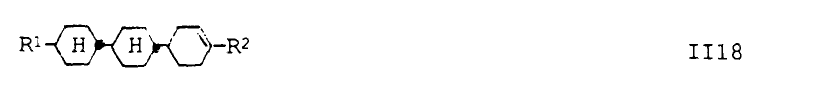 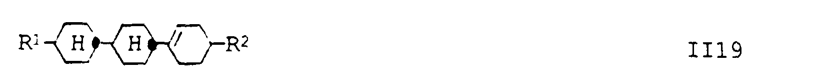 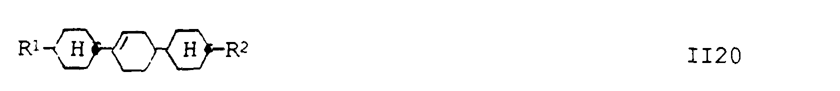 worin R¹ und R² die bei Formel I' angegebene Bedeutung haben und die 1,4-Phenylengruppen in IIB bis II17 jeweils unabhängig voneinander auch durch Fluor ein- oder mehrfach substituiert sein können.

Ferner enthält Komponente A vorzugsweise zusätzlich eine oder mehrere Verbindungen ausgewählt aus der Gruppe bestehend aus II21 bis II25 enthält: 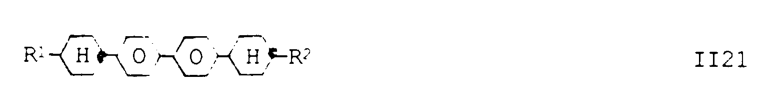 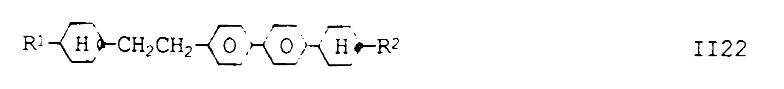 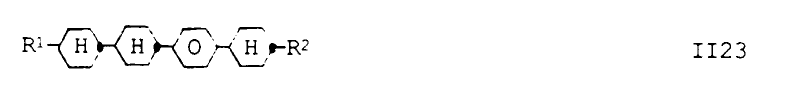 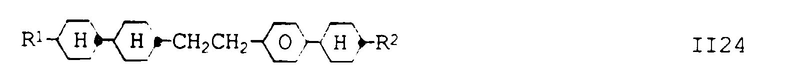 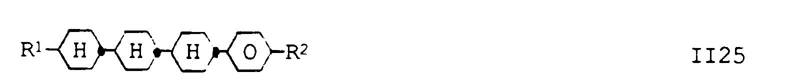 worin R¹ und R² die bei Formel I' angegebene Bedeutung haben und die 1,4-Phenylengruppen in II21 bis II25 jeweils unabhängig voneinander auch durch Fluor ein- oder mehrfach substituiert sein können.

Schließlich sind derartige Mischungen bevorzugt, deren Komponente A eine oder mehrere Verbindungen ausgewählt aus der Gruppe bestehend aus II26, II27 und II28 enthält: 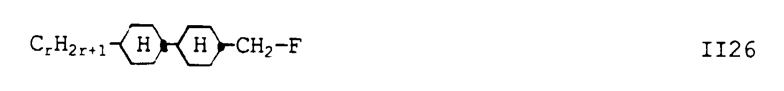 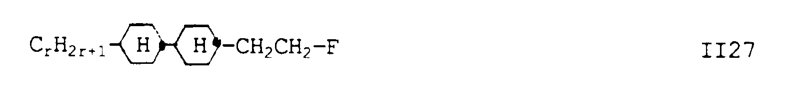 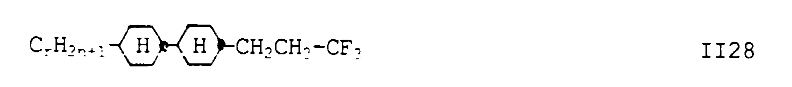 worin CᵣH₂ᵣ₊₁ eine geradkettige Alkylgruppe mit bis zu 7 C-Atomen ist.

In einigen Fällen erweist sich der Zusatz von Verbindungen der Formel 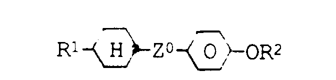 worin
- R¹ und R²: die bei Formel I' angegebene Bedeutung haben
- und:
- Z⁰: eine Einfachbindung, -CH₂CH₂-, 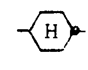 oder 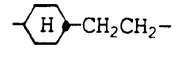
bedeutet,

zur Unterdrückung smektischer Phasen als vorteilhaft, obwohl hierdurch der spezifische Widerstand erniedrigt werden kann. Zur Erzielung von für die Anwendung optimaler Parameterkombinationen kann der Fachmann leicht feststellen, ob und falls ja in welcher Menge diese Verbindungen zugesetzt sein können. Normalerweise werden weniger als 15 %, insbesondere 5-10 % verwendet.

Ferner bevorzugt sind Flüssigkristalliuischungen, die eine oder mehrere Verbindungen ausgewählt aus der Gruppe bestehend aus III' und IV' enthalten: 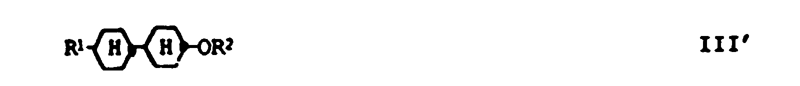 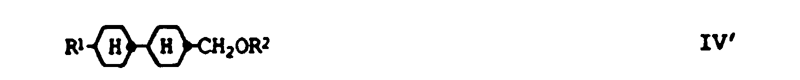 worin R¹ und R² die bei Formel I' angegebene Bedeutung haben.

Die Art und Menge der polaren Verbindungen mit positiver dielektrischer Anisotropie ist an sich nicht kritisch. Der Fachmann kann unter einer großen Palette bekannter und in vielen Fällen auch kommerziell verfügbarer Komponenten und Basisgemische in einfachen Routineversuchen geeignete Materialien auswählen. Die erfindungsgemäßen Medien enthalten eine oder mehrere Verbindungen der Formel I" 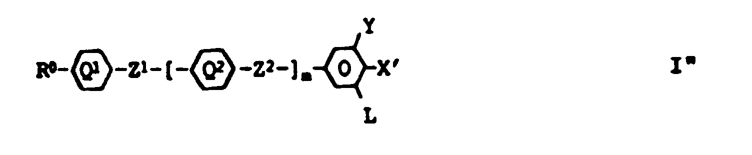 worin Z¹, Z² und m die bei Formel I' angegebene Bedeutung haben, Q¹ und Q² jeweils unabhängig voneinander 1,4-Phenylen, trans-1,4-cyclohexylen oder 3-Fluor-1,4-phenylen- oder einer der Reste Q¹ und Q² auch trans-1,3-Dioxan-2,5-diyl, Pyrimidin-2,5-diyl, Pyridin-2,5-diyl oder 1,4-cyclohexenylen bedeutet,
R⁰ n-Alkyl, n-Alkenyl, n-Alkoxy oder n-Oxaalkyl mit jeweils bis zu 9 C-Atomen, L H oder F, Y H oder F und X' CN, Halogen, CF₃, OCF₃ oder OCHF₂ ist.

In einer bevorzugten Ausführungsform basieren die erfindungsgemäßen Medien für STN- oder TN-Anwendungen auf Verbindungen der Formel I" worin X' CN bedeutet. Es versteht sich, daß auch kleinere oder größere Anteile von anderen Verbindungen der Formel I" (X' ≠ CN) in Frage kommen. Für MFK-Anwendungen enthalten die erfindungsgemäßen Medien vorzugsweise nur bis zu ca. 10 % an Nitrilen der Formel I" (vorzugsweise jedoch keine Nitrile der Formel I", sondern Verbindungen der Formel I' mit X' = Halogen, CF₃, OCF₂ oder OCHF₂). Diese Medien basieren vorzugsweise auf den Verbindungen der Formeln II bis XII.

Der Aufbau der erfindungsgemäßen STN- bzw. MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefaßt und umfaßt auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe oder chirale Dotierstoffe zugesetzt werden.

C bedeutet eine kristalline, S eine smektische, S_{B} eine smektisch B, N eine nematische und I die isotrope Phase.

V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2,5-fachen Wert von V₁₀ • Δn bezeichnet die optische Anisotropie und nₒ den Brechungsindex. Δε bezeichnet die dielektrische Anisotropie (Δε = ε_{||} - ε_{⊥}, wobei ε_{||} die Dielektrizitätskonstante parallel zu den Moleküllängsachsen und ε_{⊥} die Dielektrizitätskonstante senkrecht dazu bedeutet. Die elektrooptischen Daten wurden in einer TN-Zelle im 1. Minimum (d.h. bei einem d • Δn-Wert von 0,5) bei 20 °C gemessen, sofern nicht ausdrücklich etwas anderes angegeben wird. Die optischen Daten wurden bei 20 °C gemessen, sofern nicht ausdrücklich etwas anderes angegeben wird.

Die folgenden Beispiele sollen die Erfindung erläutern, ohne sie zu begrenzen. Vor und nachstehend sind alle Temperaturen in °C angegeben. Die Prozentzahlen sind Gewichtsprozente.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ sind geradkettige Alkylreste mit n bzw. m C-Atomen. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten R¹, R², L¹, L² und L³:

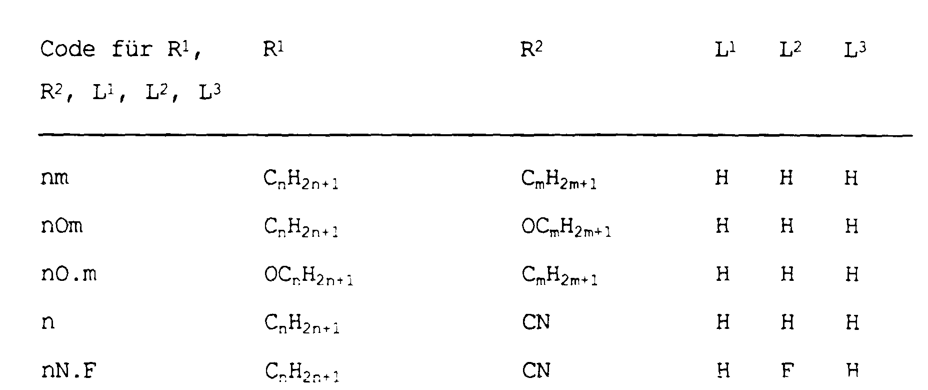

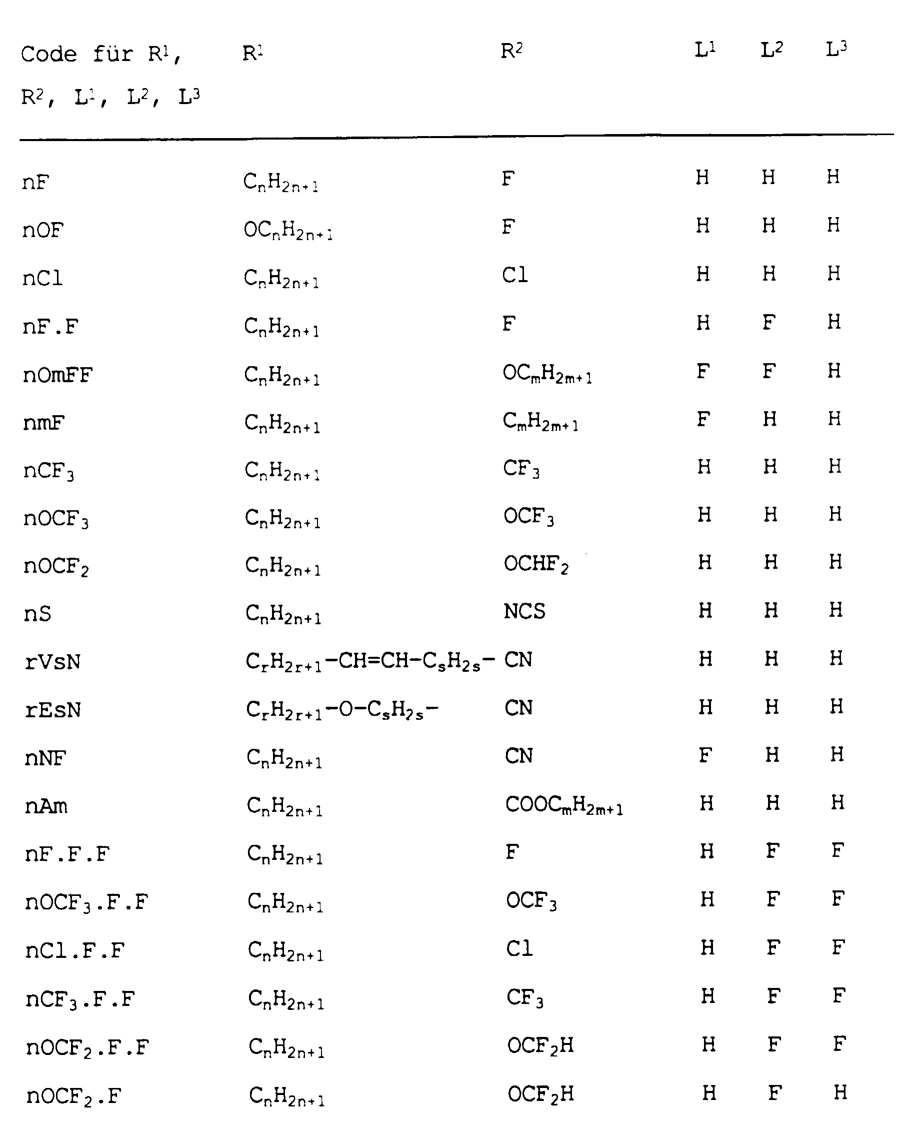

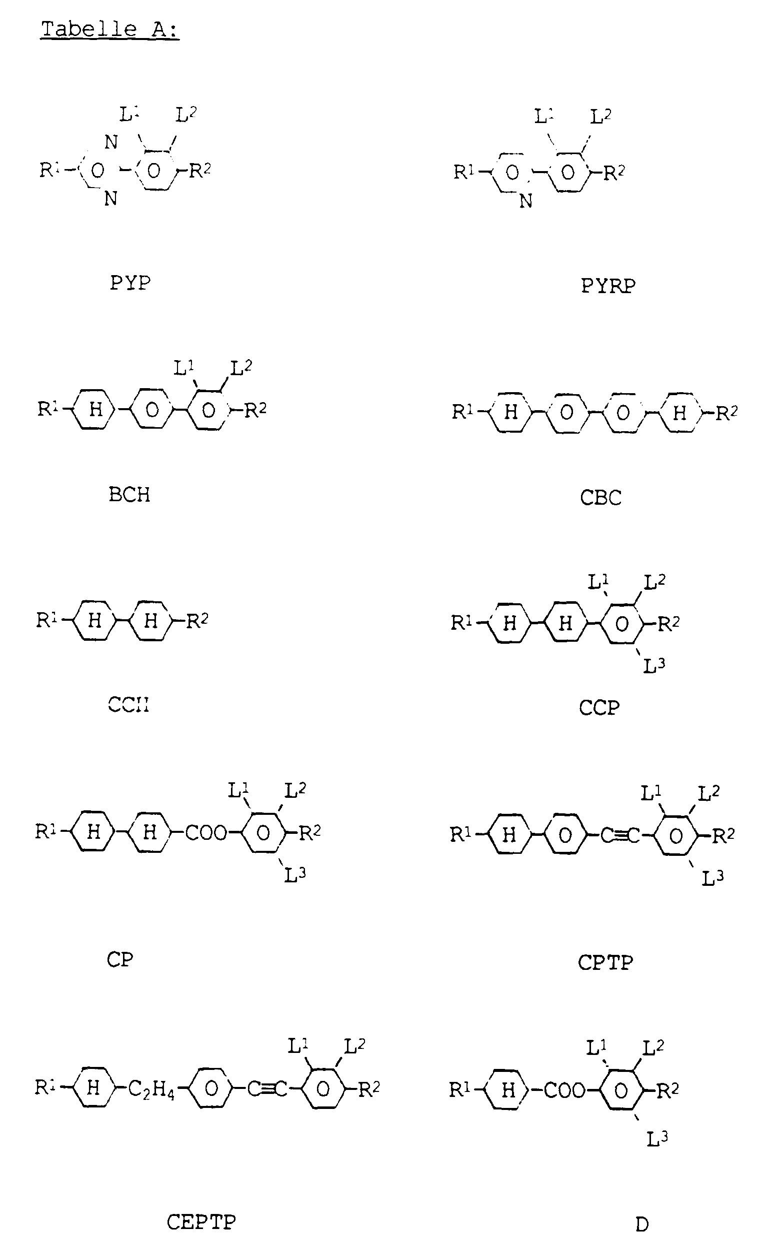

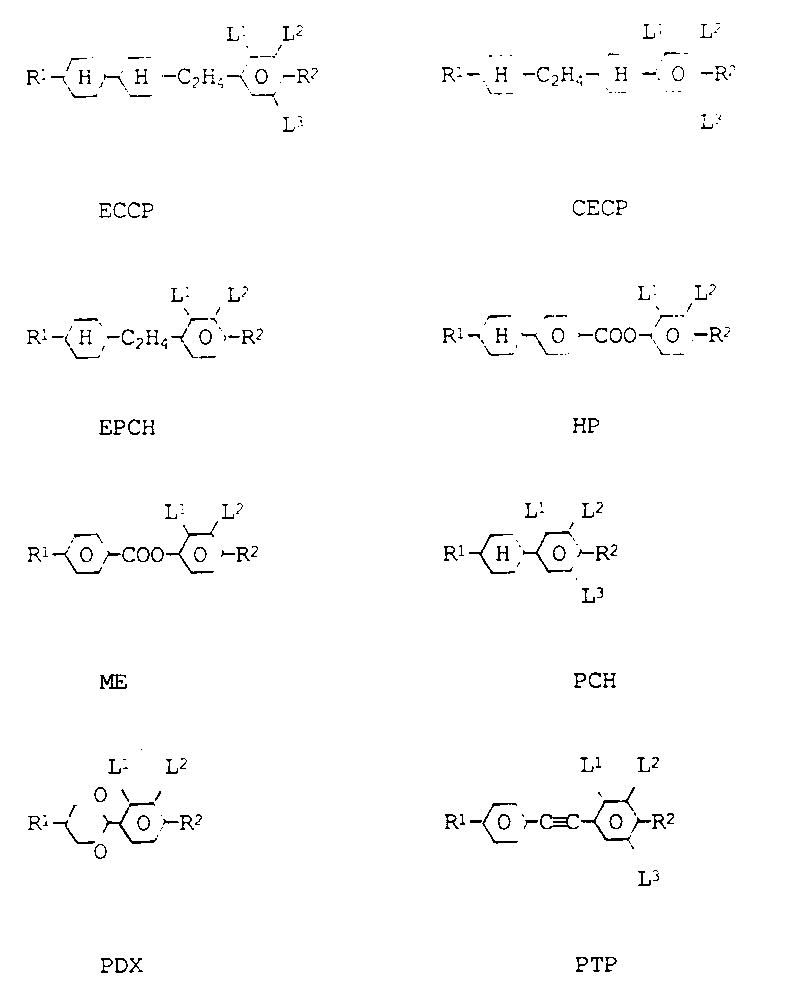

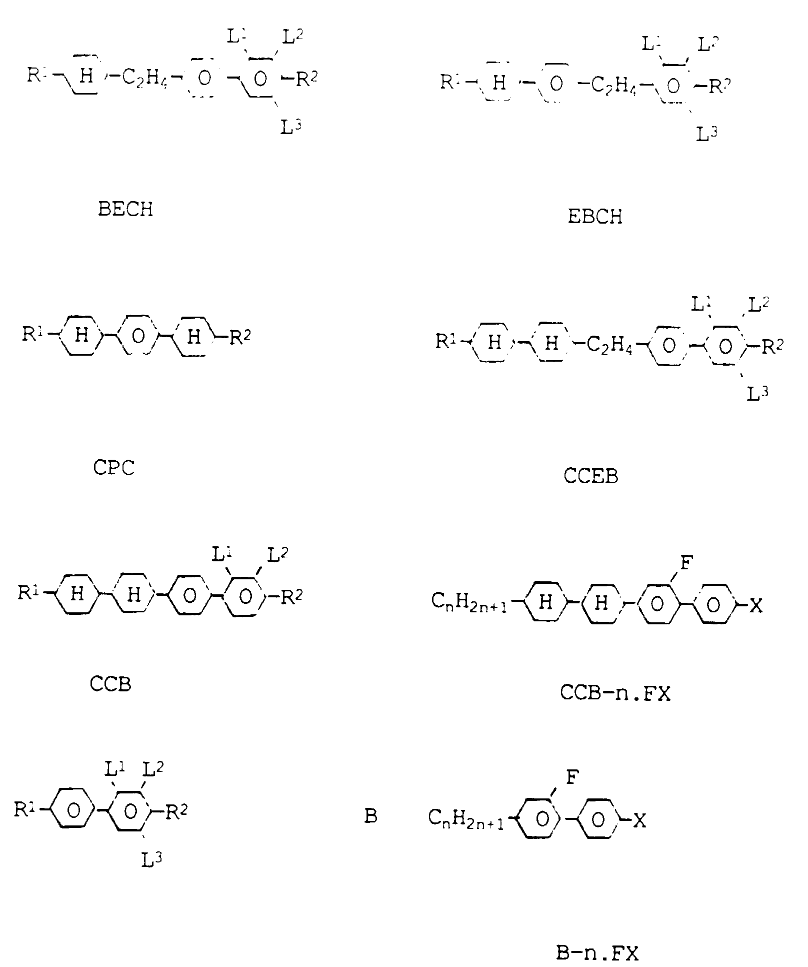

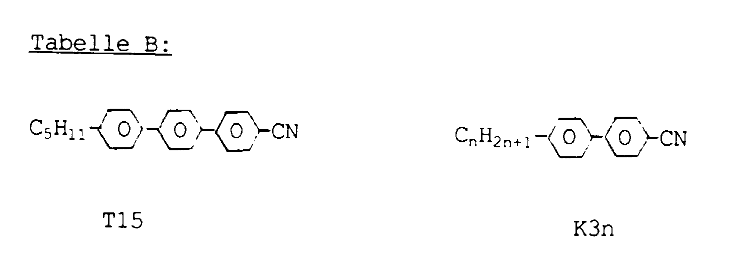

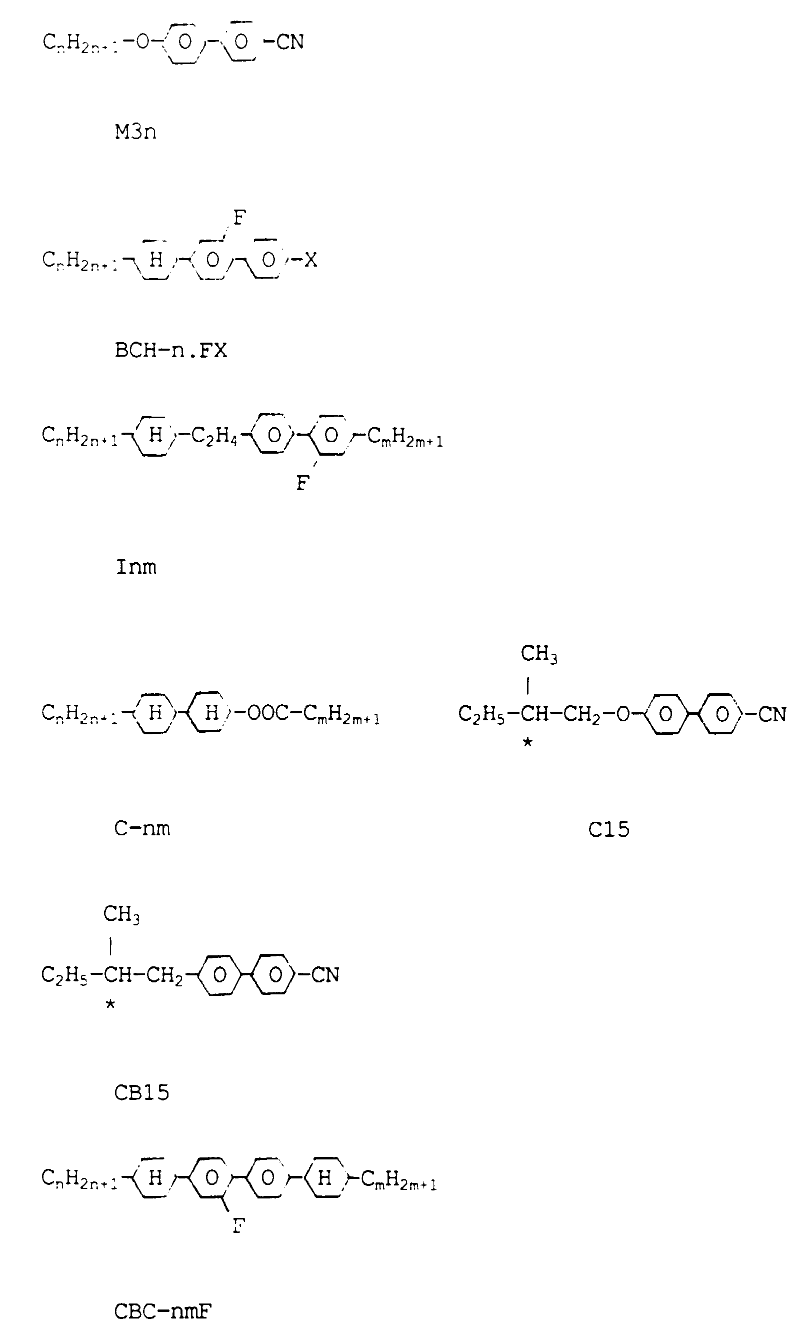

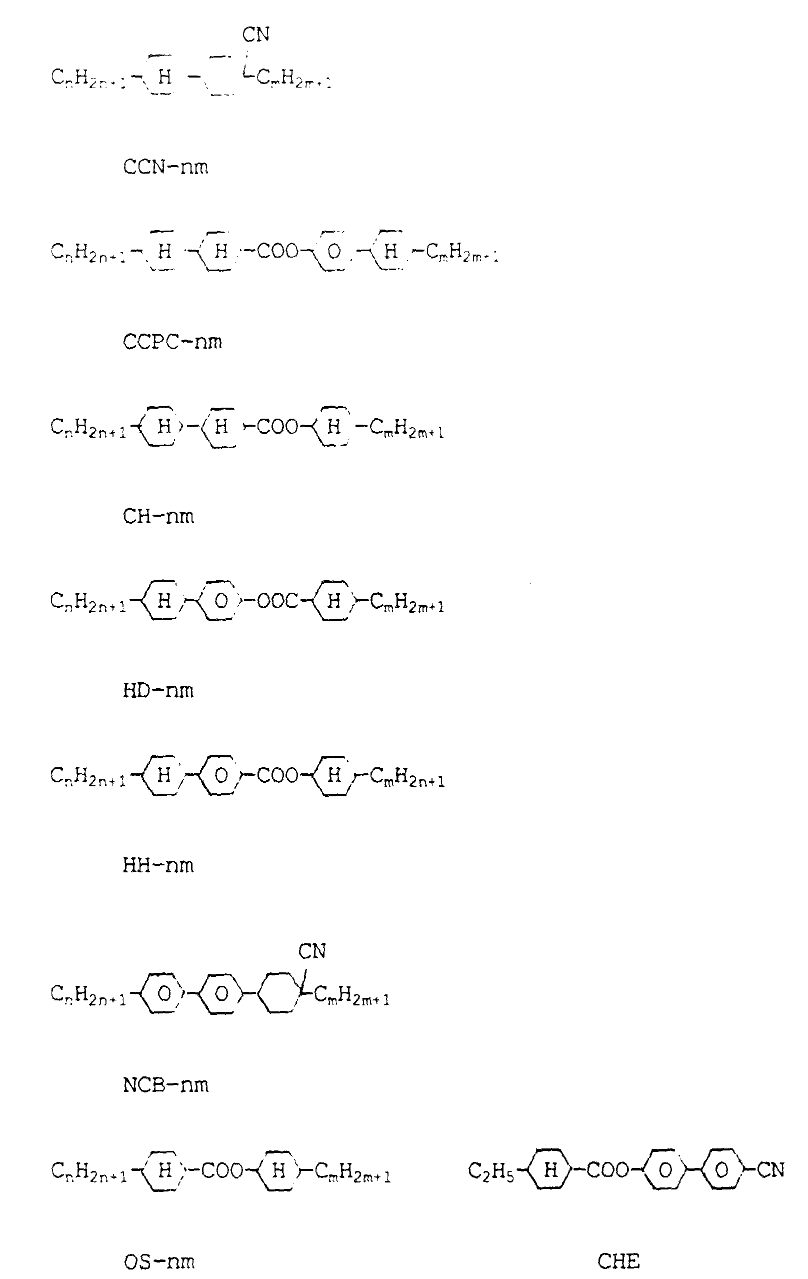

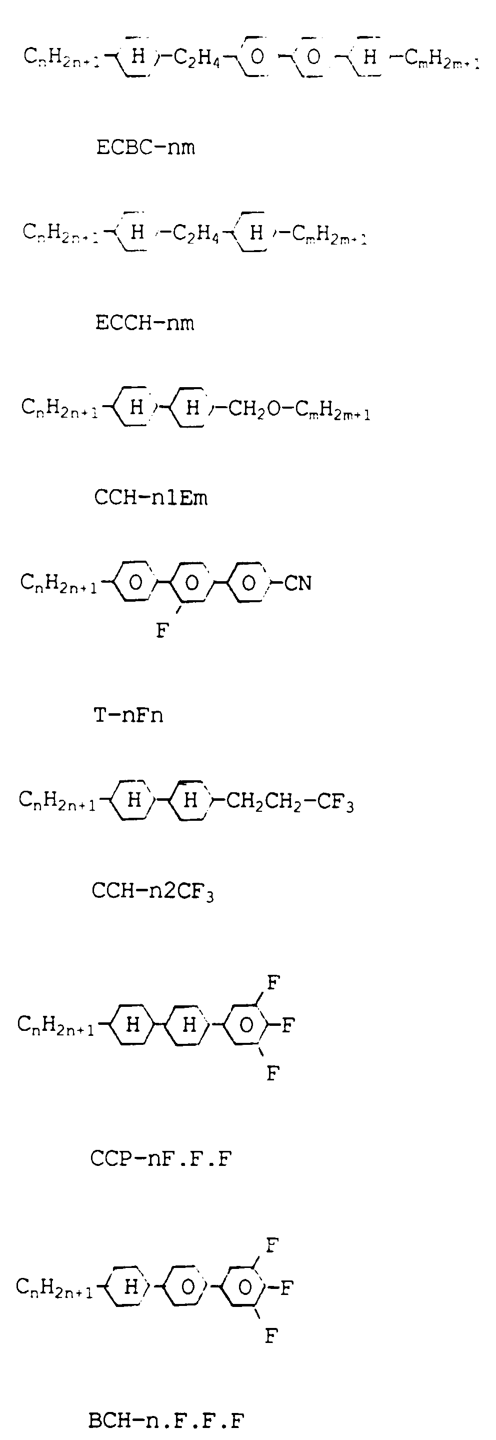

### Beispiel 1

| | |
|---|---|
| PCH-3 | 6 % |
| PCH-5F | 12 % |
| PCH-7F | 12 % |
| CCP-2Cl | 8 % |
| CCP-3Cl | 10 % |
| CCP-5Cl | 8 % |
| BCH-52 | 12 % |
| CCPC-33 | 3 % |
| CCPC-34 | 4 % |
| CCPC-35 | 3 % |
| CCP-2F.F | 10 % |
| CCP-3F.F | 12 % |

## Patentansprüche

1. Flüssigkristallines Medium auf der Basis eines Gemisches von polaren Verbindungen mit positiver dielektrischer Anisotropie, dadurch gekennzeichnet, daß es eine oder mehrere Verbindungen der allgemeinen Formel I, 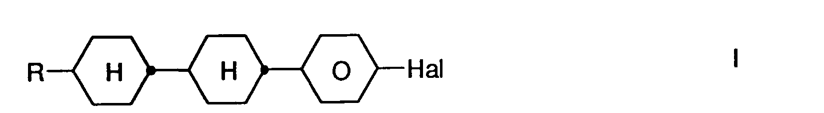 worin Hal Fluor oder Chlor und R Alkyl, Oxaalkyl, Fluoralkyl oder Alkenyl mit jeweils bis zu 7 C-Atomen bedeutet,
eine oder mehrere Verbindungen mit einer dielektrischen Anisotropie von -1,5 bis +1,5 ausgewählt aus der Gruppe bestehend aus folgenden Formeln: 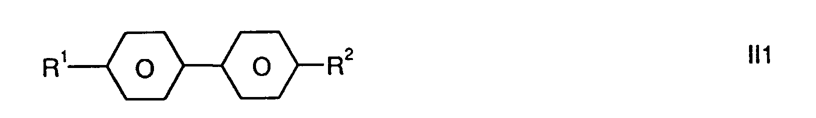 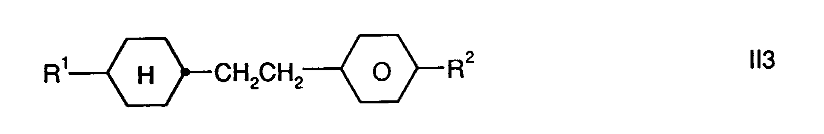 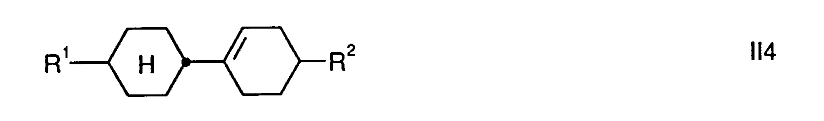 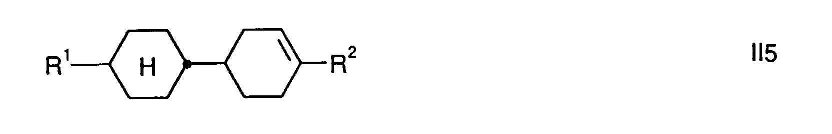 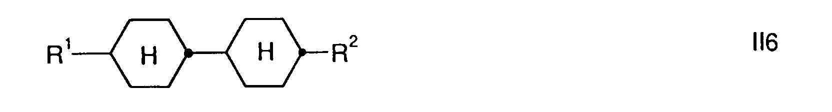 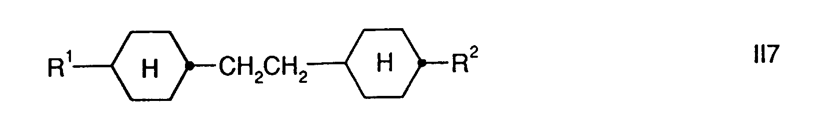 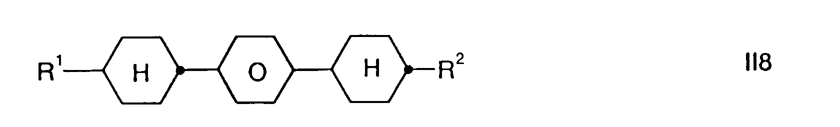 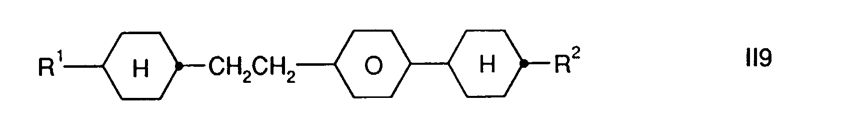 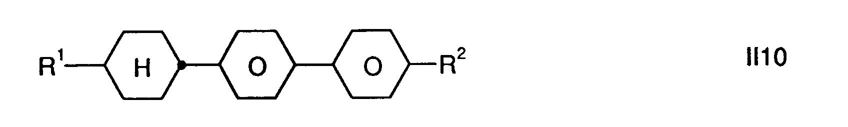 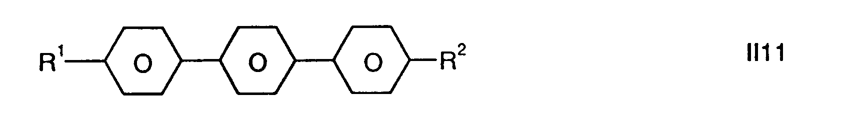 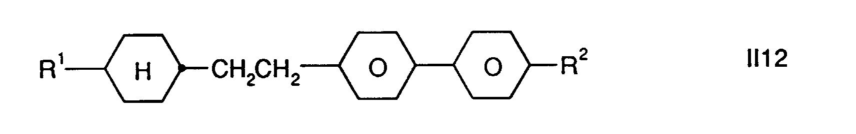 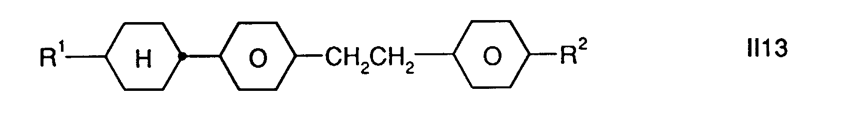 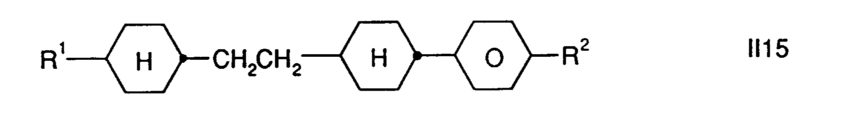 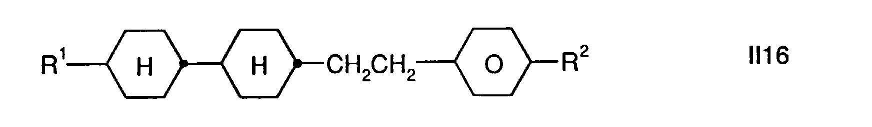 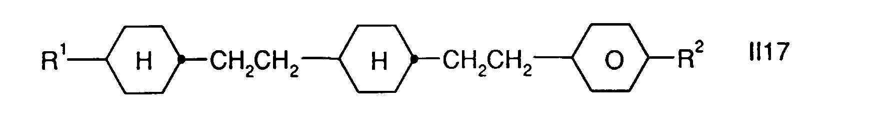 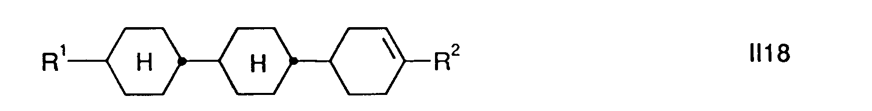 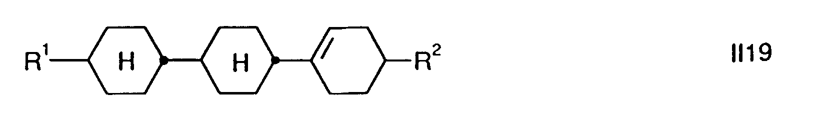 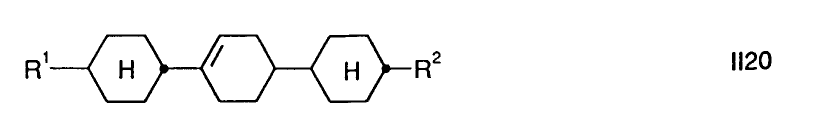 worin R¹ und R² jeweils unabhängig voneinander n-Alkyl, n-Alkoxy, ω-fluoralkyl oder n-Alkenyl mit bis zu 9 C-Atomen bedeuten und die 1,4-Phenylengruppen in 118 bis 1117 jeweils unabhängig voneinander auch durch Fluor ein- oder mehrfach substituiert sein können,
und eine oder mehrere Verbindungen der Formel I" enhält, 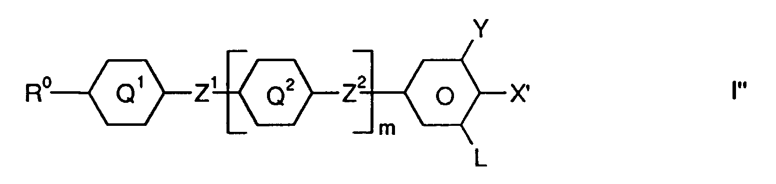 worin
Z¹ und Z² jeweils unabhängig voneinander -CH₂CH₂-, -C≡C-, -CO-O-, -O-CO- oder eine Einfachbindung,
m 0, 1 oder 2,
Q¹ und Q² jeweils unabhängig voneinander 1,4-Phenylen, trans-1,4-Cyclohexylen oder 3-Fluor-1,4-phenylen- oder einer der Reste Q¹ und Q² auch trans-1,3-Dioxan-2,5-diyl, Pyrimidin-2,5-diyl, Pyridin-2,5-diyl oder 1,4-Cyclohexenylen bedeutet,
R⁰ n-Alkyl, n-Alkenyl, n-Alkoxy oder n-Oxaalkyl mit jeweils bis zu 9 C-Atomen,
L H oder F,
Y H oder F und
X' CN, Halogen, CF₃, OCF₃ oder OCHF₂ ist.

2. Medium nach Anspruch 1, dadurch gekennzeichnet daß es eine oder mehrere Verbindungen der Formel I" enthält, worin X' CN bedeutet.

3. Medium nach Anspruch 1 oder Anspruch 2, dadurch gekennzeichnet daß es eine oder mehrere Verbindungen der Formel I" enthält, worin
R⁰ n-Alkenyl mit bis zu 9 C-Atomen ist.

4. Medium nach einem der Ansprüche 1 bis 3, dadurch gekennzeichnet daß es eine oder mehrere Verbindungen der Formel 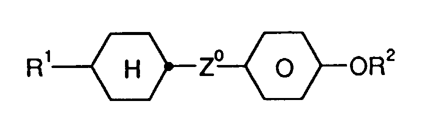 enthält, worin
R¹ und R² jeweils unabhängig voneinander n-Alkyl, n-Alkoxy, ω-fluoralkyl oder n-Alkenyl mit bis zu 9 C-Atomen,
und
Z⁰ eine Einfachbindung, -CH₂CH₂-, 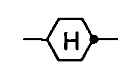 oder 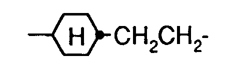
bedeutet.

5. Medium nach Anspruch 1, dadurch gekennzeichnet, daß es eine oder mehrere Verbindungen ausgewählt aus der Gruppe bestehend aus den allgemeinen Formeln II, III und IV enthält: 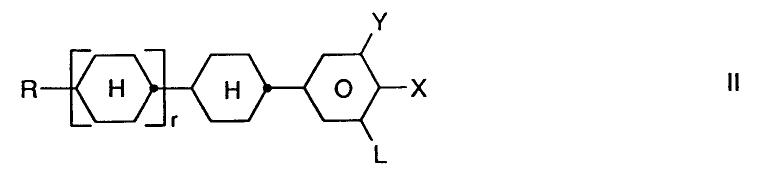 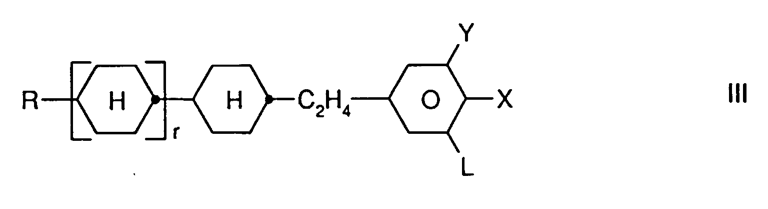 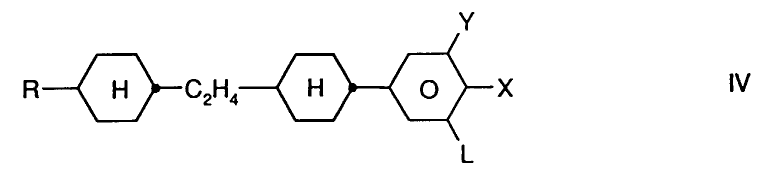 worin die einzelnen Reste die folgenden Bedeutungen haben:
R Alkyl, Oxaalkyl, Fluoralkyl oder Alkenyl mit jeweils bis zu 7 C-Atomen
X F, Cl, CF₃, OCF₃ oder OCHF₂
L H oder F
Y H oder F
r 0 oder 1.

6. Medium nach Anspruch 1 oder 5, dadurch gekennzeichnet, daß es zusätzlich eine oder mehrere Verbindungen ausgewählt aus der Gruppe bestehend aus den allgemeinen Formeln V bis VIII enthält: 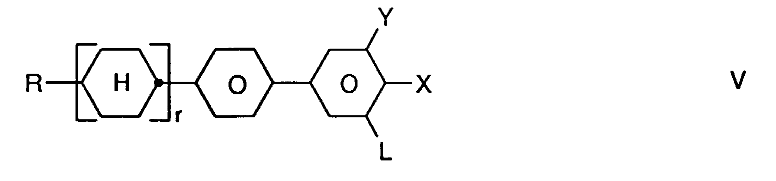 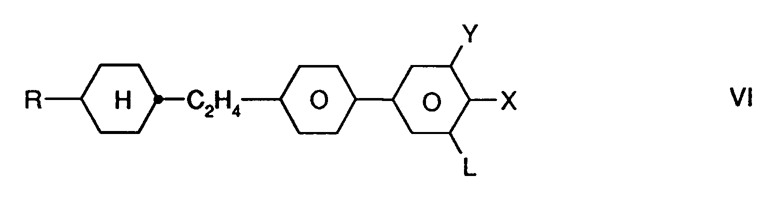 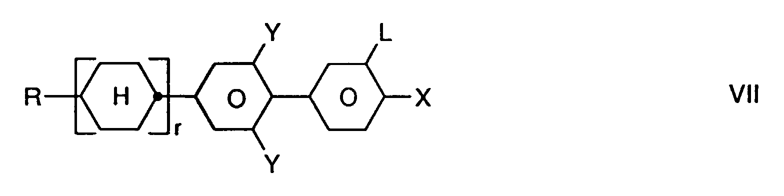 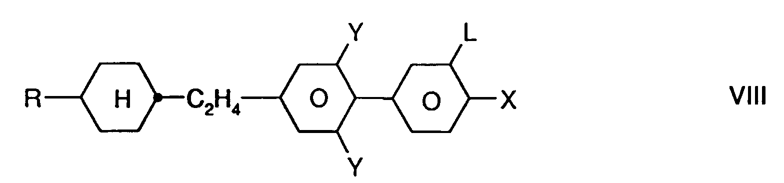 worin R, r, L, X und Y jeweils unabhängig voneinander eine der in Anspruch 5 angegebene Bedeutung haben.

7. Medium nach Anspruch 5, dadurch gekennzeichnet, daß der Anteil an Verbindungen der Formeln I bis IV zusammen im Gesamtgemisch mindestens 50 Gew.% beträgt.

8. Medium nach Anspruch 1 oder 5, dadurch gekennzeichnet, daß der Anteil an Verbindungen der Formel I im Gesamtgemisch 10 bis 50 Gew.% beträgt.

9. Medium nach mindestens einem der Ansprüch 5 bis 7, dadurch gekennzeichnet, daß der Anteil an Verbindungen der Formeln II bis IV im Gesamtgemisch 30 bis 70 Gew.% beträgt.

10. Verwendung des flüssigkristallinen Mediums nach Anspruch 1 für elektrooptische Zwecke.

11. Elektrooptische Flüssigkristallanzeige enthaltend ein flüssigkristallines Medium nach Anspruch 1.

## Claims

1. Liquid-crystalline medium based on a mixture of polar compounds having positive dielectric anisotropy, characterized in that it comprises one or more compounds of the general formula I 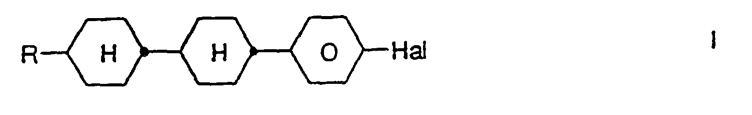 in which Hal is fluorine or chlorine, and R is alkyl, oxaalkyl, fluoroalkyl or alkenyl, in each case having up to 7 carbon atoms,
one or more compounds having a dielectric anisotropy of from -1.5 to +1.5, selected from the group consisting of the following formulae: 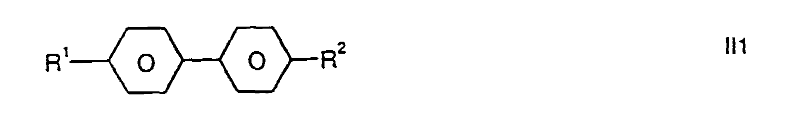 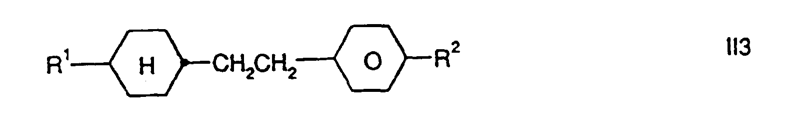 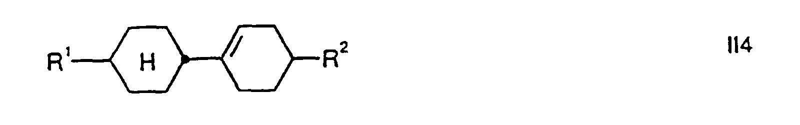 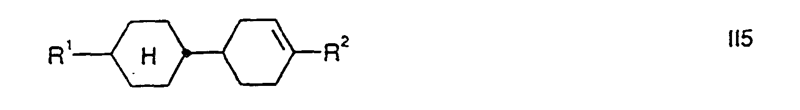 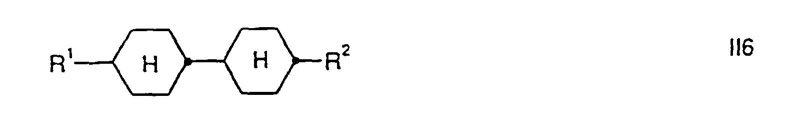 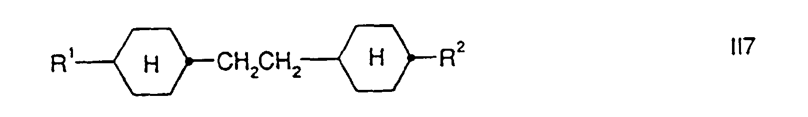 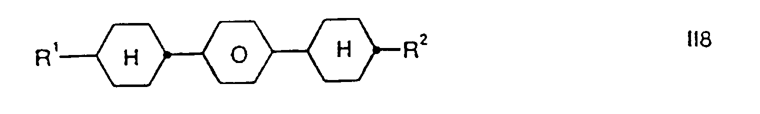 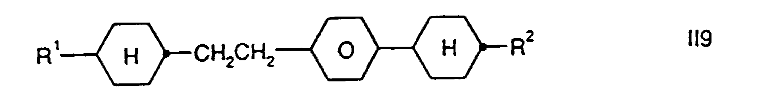 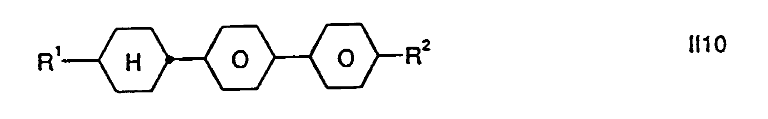 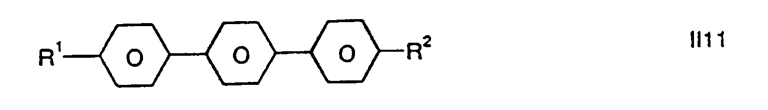 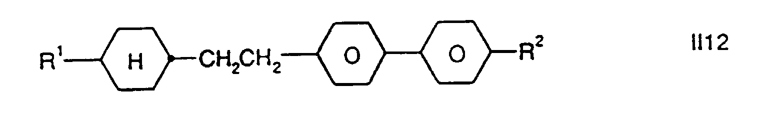 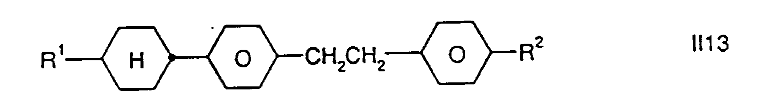 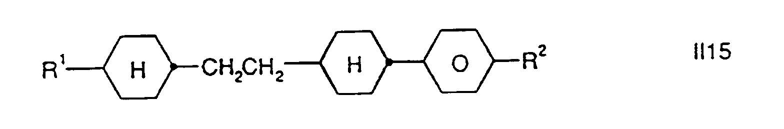 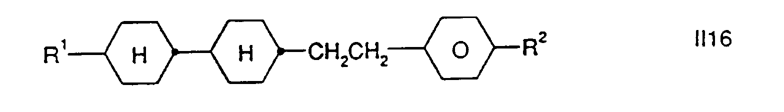 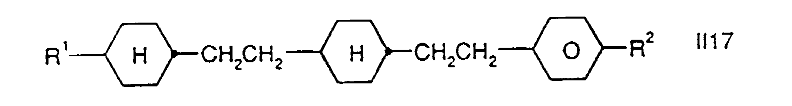 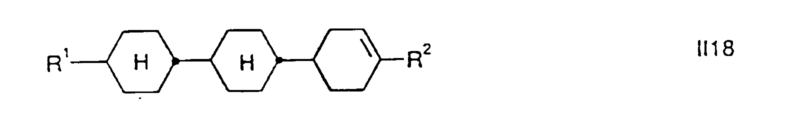 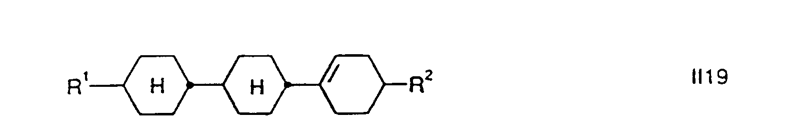 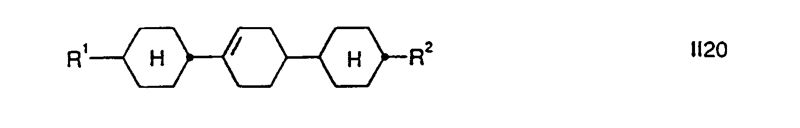 in which R¹ and R² are each, independently of one another, n-alkyl, n-alkoxy, ω-fluoroalkyl or n-alkenyl having up to 9 carbon atoms, and the 1,4-phenylene groups in II8 to II17 may each, independently of one another, also be monosubstituted or polysubstituted by fluorine,
and one or more compounds of the formula I" 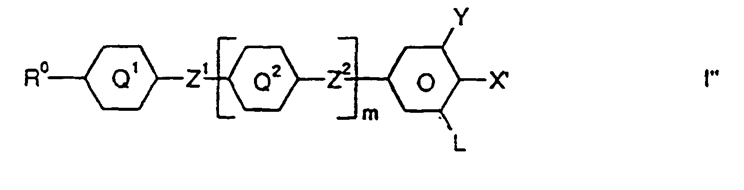 in which
Z¹ and Z² are each, independently of one another, -CH₂CH₂-, -C≡C-, -CO-O-, -O-CO- or a single bond,
m is 0, 1 or 2,
Q¹ and Q² are each, independently of one another, 1,4-phenylene, trans-1,4-cyclohexylene or 3-fluoro-1,4-phenylene, or one of the radicals Q¹ and Q² is alternatively trans-1,3-dioxane-2,5-diyl, pyrimidine-2,5-diyl, pyridine-2,5-diyl or 1,4-cyclohexenylene,
R⁰ is n-alkyl, n-alkenyl, n-alkoxy or n-oxaalkyl, in each case having up to 9 carbon atoms,
L is H or F,
Y is H or F, and
X' is CN, halogen, CF₃, OCF₃ or OCHF₂.

2. Medium according to Claim 1, characterized in that it comprises one or more compounds of the formula I" in which X' is CN.

3. Medium according to Claim 1 or Claim 2, characterized in that it comprises one or more compounds of the formula I" in which
R⁰ is n-alkenyl having up to 9 carbon atoms.

4. Medium according to one of Claims 1 to 3, characterized in that it comprises one or more compounds of the formula 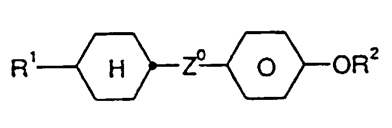 in which
R¹ and R² are each, independently of one another, n-alkyl, n-alkoxy, ω-fluoroalkyl or n-alkenyl having up to 9 carbon atoms,
and
Z⁰ is a single bond, -CH₂CH₂-, 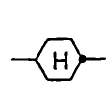 or

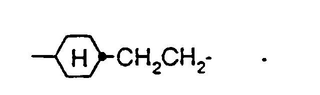

5. Medium according to Claim 1, characterized in that it comprises one or more compounds selected from the group consisting of the general formulae II, III and IV: 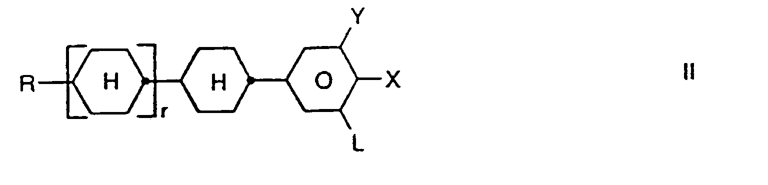 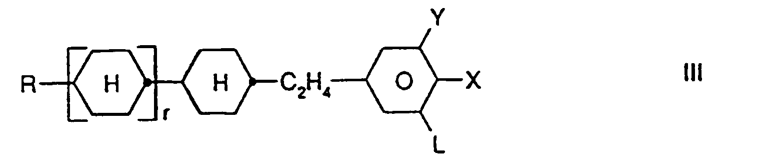 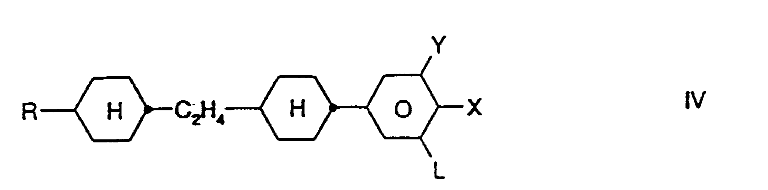 in which the individual radicals have the following meanings:
R is alkyl, oxaalkyl, fluoroalkyl or alkenyl, in each case having up to 7 carbon atoms,
X is F, Cl, CF₃, OCF₃ or OCHF₂,
L is H or F,
Y is H or F
r is 0 or 1.

6. Medium according to Claim 1 or 5, characterized in that it additionally comprises one or more compounds selected from the group consisting of the general formulae V to VIII: 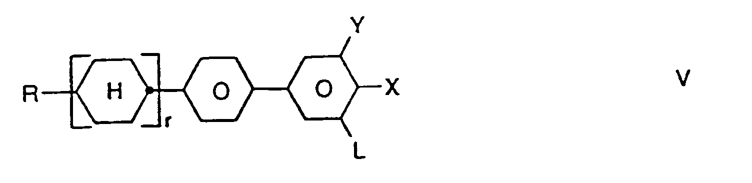 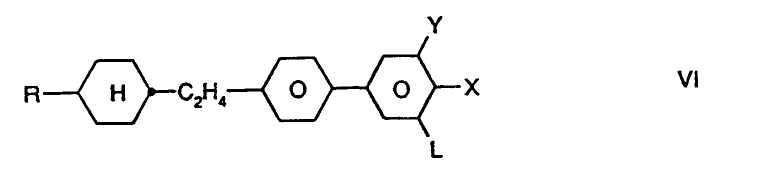 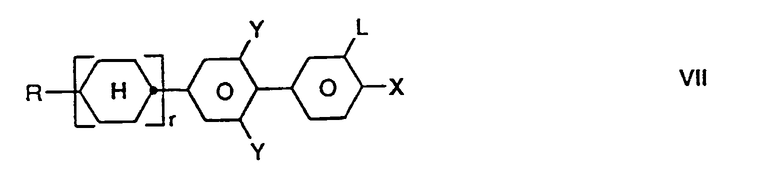 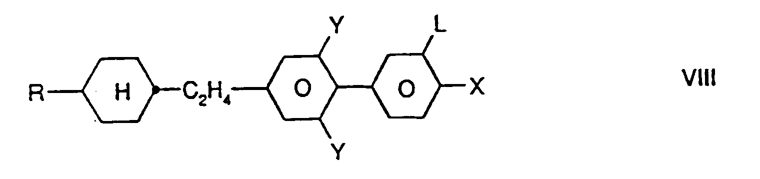 in which R, r, L, X and Y each, independently of one another, are as defined in Claim 5.

7. Medium according to Claim 5, characterized in that the proportion of compounds of the formulae I to IV together in the mixture as a whole is at least 50% by weight.

8. Medium according to Claim 1 or 5, characterized in that the proportion of compounds of the formula I in the mixture as a whole is from 10 to 50% by weight.

9. Medium according to at least one of Claims 5 to 7, characterized in that the proportion of compounds of the formulae II to IV in the mixture as a whole is from 30 to 70% by weight.

10. Use of the liquid-crystalline medium according to Claim 1 for electro-optical purposes.

11. Electro-optical liquid-crystal display containing a liquid-crystalline medium according to Claim 1.

## Revendications

1. Milieu à cristaux liquides à base d'un mélange de composés polaires à anisotropie diélectrique positive, caractérisé en ce qu'il contient un ou plusieurs composés de formule générale I, 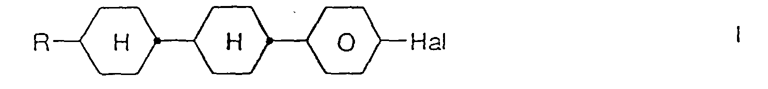 dans laquelle Hal représente le fluor ou le chlore et R représente un alkyle, oxaalkyle, fluoroalkyle ou alcényle ayant à chaque fois jusqu'à 7 atomes de carbone,
un ou plusieurs composés à anisotropie diélectrique allant de -1,5 à +1,5 choisis dans le groupe constitué par les formules suivantes: 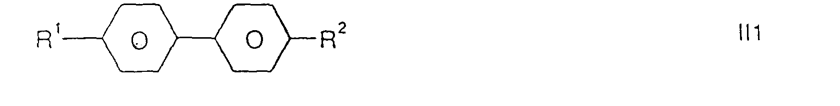 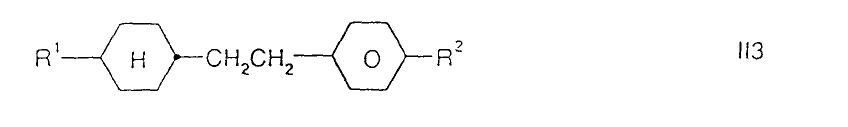 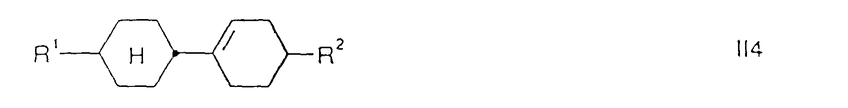 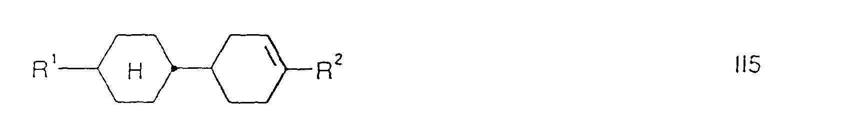 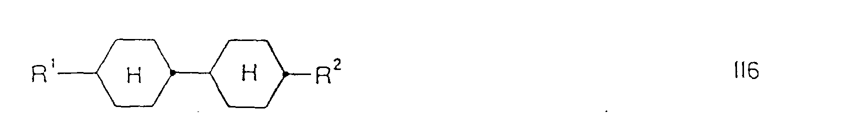 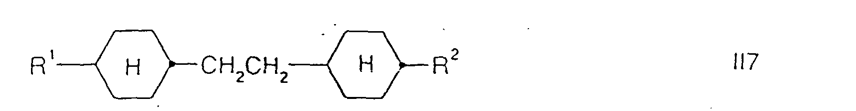 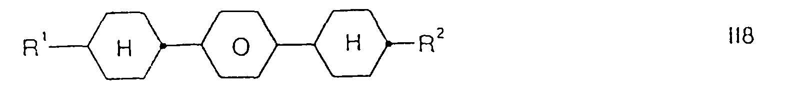 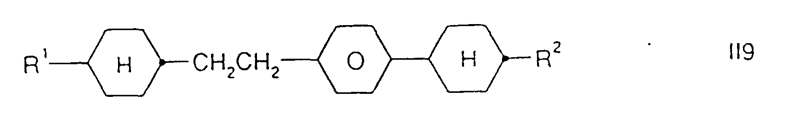 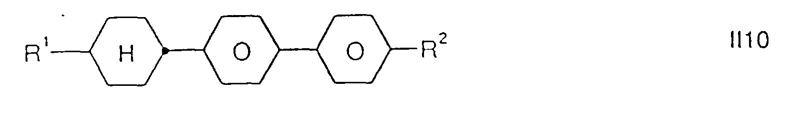 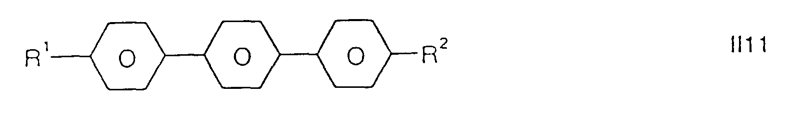 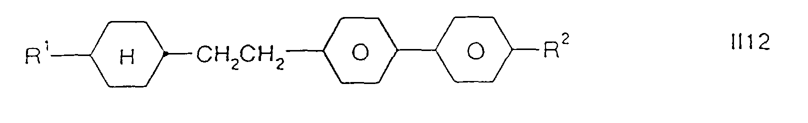 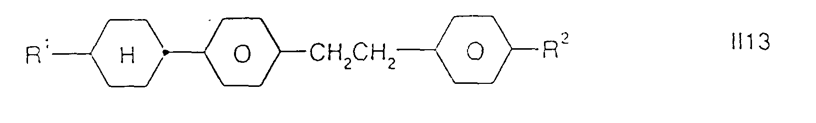 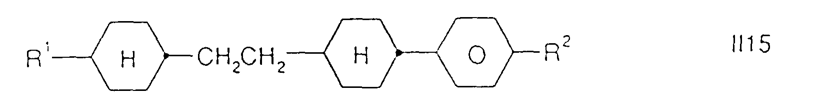 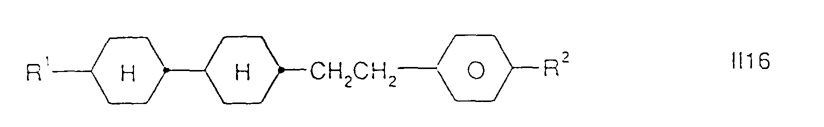 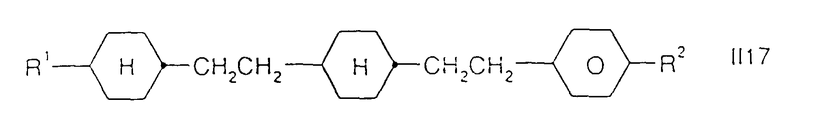 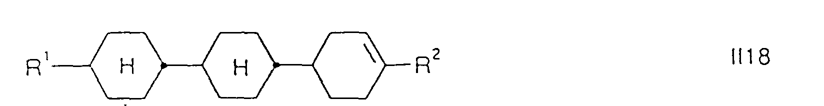 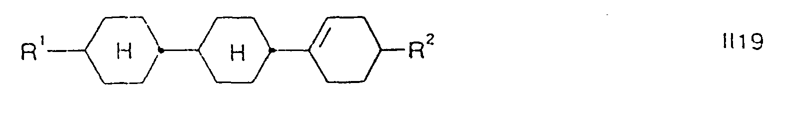 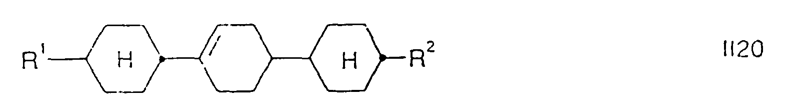 dans lesquelles R¹ et R² représentent chacun indépendamment l'un de l'autre un n-alkyle, n-alcoxy, ω-fluoroalkyle ou n-alcényle ayant jusqu'à 9 atomes àe carbone et les groupes 1,4-phénylène dans II8 à II17 peuvent à chaque fois être également mono- ou polysubstitués indépendamment l'un de l'autre par un fluor,
et en ce qu'il contient un ou plusieurs composés de formule I", 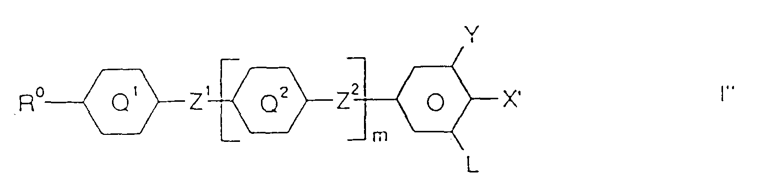 dans laquelle
Z¹ et Z² représentent chacun indépendamment l'un de l'autre -CH₂CH₂-, -C≡C-, -CO-O-, -O-CO- ou une liaison simple,
m vaut 0, 1 ou 2,
Q¹ et Q² représentent chacun indépendamment l'un de l'autre un 1,4-phénylène, un trans-1,4-cyclohexylène ou un 3-fluoro-1,4-phénylène, ou l'un des radicaux Q¹ et Q² représente également un trans-1,3-dioxanne-2,5-diyle, un pyrimidine-2,5-diyle, un pyridine-2,5-diyle ou un 1,4-cyclohexénylène,
R⁰ représente un n-alkyle, n-alcényle, n-alcoxy ou n-oxaalkyle ayant à chaque fois jusqu'à 9 atomes de carbone,
L représente H ou F et
X' représente CN, un halogène, CF₃ , OCF₃ ou OCHF₂.

2. Milieu selon la revendication 1, caractérisé en ce qu'il contient un ou plusieurs composés de formule I" dans laquelle X' représente CN.

3. Milieu selon la revendication 1 ou la revendication 2, caractérisé en ce qu'il contient un ou plusieurs composés de formule I", dans laquelle
R⁰ représente un n-alcényle ayant jusqu'à 9 atomes de carbone.

4. Milieu selon l'une des revendications 1 à 3, caractérisé en ce qu'il contient un ou plusieurs composés de formule 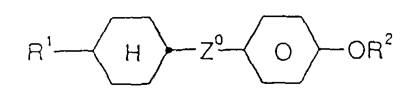 dans laquelle
R¹ et R² représentent chacun indépendamment l'un de l'autre un n-alkyle, n-alcoxy, -fluoroalkyle ou n-alcényle ayant jusqu'à 9 atomes de carbone,
et
Z⁰ représente une liaison simple, -CH₂CH₂-, 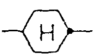 ou

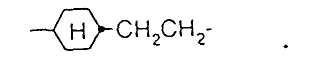

5. Milieu selon la revendication 1, caractérisé en ce qu'il contient un ou plusieurs composés choisis dans le groupe constitué par les formules générales II, III et IV: 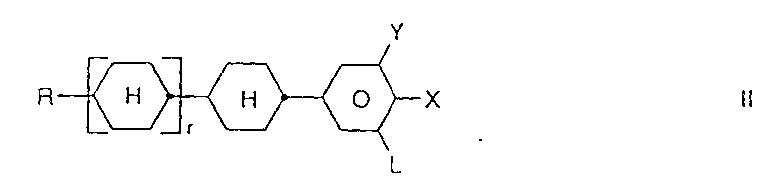 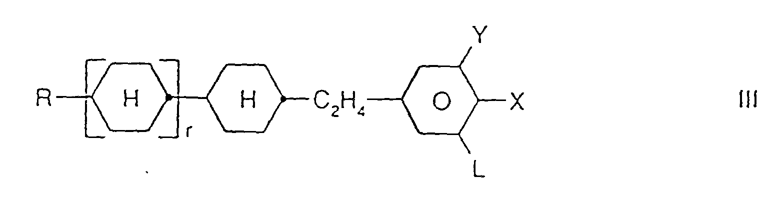 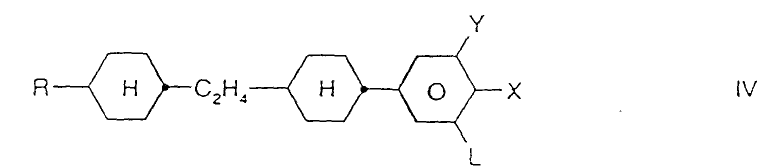 dans lesquelles les divers radicaux ont les significations données ci-dessous:
R représente un alkyle, oxaalkyle, fluoroalkyle ou alcényle avec à chaque fois jusqu'à 7 atomes de carbone
X représente F, Cl, CF₃ , OCF₃ ou OCHF₂,
L représente H ou F,
Y représente H ou F,
r vaut 0 ou 1.

6. Milieu selon la revendication 1 ou 5, caractérisé en ce qu'il contient en outre un ou plusieurs composés choisis dans le groupe constitué par les formules générales V à VIII: 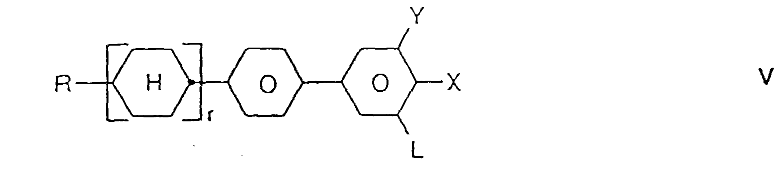 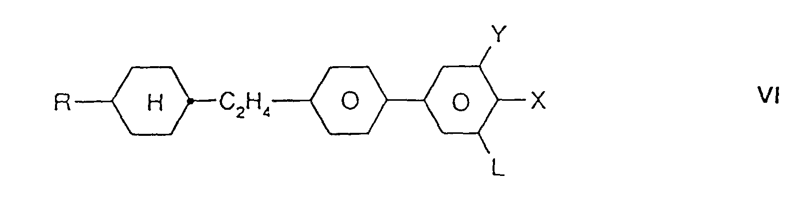 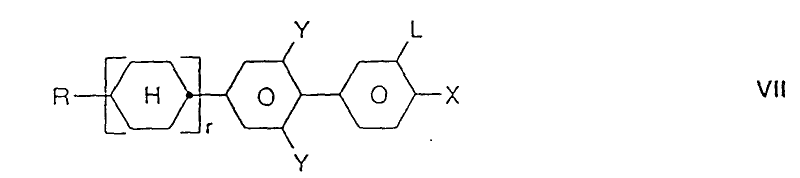 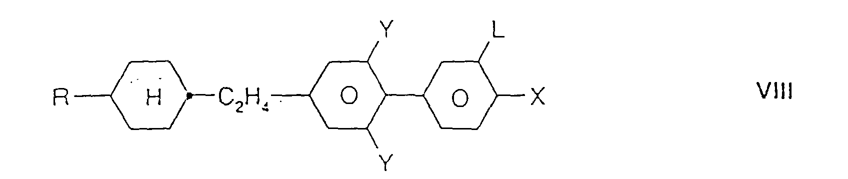 dans lesquelles R, r, L, X et Y ont à chaque fois indépendamment l'un de l'autre l'une des significations données dans la revendication 5.

7. Milieu selon la revendication 5, caractérisé en ce que la proportion de composés de formules I à IV ensemble dans le mélange total s'élève à au moins 50% en poids.

8. Milieu selon la revendication 1 ou 5, caractérisé en ce que la proportion de composés de formule I dans le mélange total s'élève à 10 à 50% en poids.

9. Milieu selon au moins une des revendications 5 à 7, caractérisé en ce que la proportion de composés de formules II à IV dans le mélange total s'élève à 30 à 70% en poids.

10. Application du milieu à cristaux liquides selon la revendication 1 dans des buts électro-optiques.

11. Affichages à cristaux liquides électro-optiques contenant un milieu à cristaux liquides selon la revendication 1.
